# EUROPÄISCHE PATENTSCHRIFT

(11) **EP 3 003 886 B1**
(45) Veröffentlichungstag und Bekanntmachung des Hinweises auf die Patenterteilung: **12.07.2017**
(21) Anmeldenummer: 14739030.6
(22) Anmeldetag: 28.05.2014
(51) Int. Cl.: B65D 8/00, B65D 81/113, B65D 81/07

(54) **TRANSPORTHALTERUNG FÜR EIN TRANSPORTOBJEKT UND VERFAHREN ZUM TRANSPORTIEREN EINES TRANSPORTOBJEKTS MIT EINER SOLCHEN TRANSPORTHALTERUNG**
TRANSPORT HOLDER FOR AN OBJECT TO BE TRANSPORTED AND METHOD FOR TRANSPORTING AN OBJECT TO BE TRANSPORTED USING SAID TYPE OF TRANSPORT HOLDER
FIXATION DE TRANSPORT CONÇUE POUR UN OBJET À TRANSPORTER ET PROCÉDÉ POUR TRANSPORTER UN OBJET À TRANSPORTER AU MOYEN DE CETTE FIXATION DE TRANSPORT

(30) Priorität: 31.05.2013 CH 10402013; 31.05.2013 CH 10412013; 31.05.2013 CH 10422013; 24.03.2014 CH 4462014; 12.05.2014 CH 7092014
(43) Veröffentlichungstag der Anmeldung: 13.04.2016
(73) Patentinhaber: WRH Walter Reist Holding AG, 8272 Ermatingen (CH)
(72) Erfinder: RUGE, Martin, 4656 Starrkirch-Wil (CH)
(74) Vertreter: CMSRK Rentsch Kaelin AG
(86) Internationale Anmeldenummer: PCT/EP2014/001449
(87) Internationale Veröffentlichungsnummer: WO 2014/191108

(56) Entgegenhaltungen:
- WO-A2-2004/082420
- BE-A7- 1 013 220
- FR-A1- 2 852 305
- JP-A- 2006 016 044
- US-A- 2 527 541
- US-A- 4 172 365
- US-A- 4 184 792

## Beschreibung

### TECHNISCHES GEBIET

Die vorliegende Erfindung bezieht sich auf das Gebiet des Transports und der Lagerung eines Transportobjekts. Sie betrifft eine Transporthalterung für ein Transportobjekt gemäss dem Oberbegriff des Anspruchs 1.

Sie betrifft weiterhin ein Verfahren zum Transportieren eines Transportobjekts mit einer solchen Transporthalterung.

### STAND DER TECHNIK

Die Verteilung von Waren aller Art erfordert besonders in der heutigen Zeit des Online-Handels über das Internet eine effiziente Bewirtschaftung einer Lieferkette, umfassend unter anderem das Einlagern von Waren in einem Zwischenlager und das zeitgerechte Bereitstellen von eingelagerten Waren.

Waren wie Geräte, Lebensmittel, Pharmazeutika, Kleider, Betriebsstoffe, Bücher, Tonträger, Filmträger, Datenträger etc. werden bereits beim Hersteller mit einer kundengerechten Verpackung versehen, welche meistens zusätzliche Dokumente enthält wie einer Produktbeschreibung, Bedienungsanleitung, Gebrauchsanweisung, etc. Die verpackte Ware ist für die Auslieferung an den Endkunden als eine Einheit vorgesehen. Im Rahmen einer Lieferkette werden solche Verpackungseinheiten beim Hersteller der Waren zunächst oft in grössere Einheiten zusammengestellt, wie z.B. in Kisten, auf Paletten, in Container, etc., welche dann der Lieferkette zugeführt werden.

Die Anlieferung von Waren bei einem Händler in der Lieferkette erfolgt deshalb oft in Kisten oder Paletten, welche die einzelnen für den Endkunden bestimmten Verpackungseinheiten enthalten. Die Vereinzelung der Verpackungseinheiten ist allerdings sehr aufwändig und eine maschinelle Ein- und Auslagerung lässt sich kaum wirtschaftlich realisieren. Für bestimmte Warenarten oder Warenlager kommt ein manuelles Ein- und Auslagern zur Anwendung.

Für den Betrieb eines Warenlagers bei einem Händler sind automatisierte Hochregallager bekannt. Kisten und Paletten werden mit in den Gängen zwischen den Regalen bewegbaren Ladevorrichtungen eingelagert und es werden bei Bedarf einzelne Verpackungseinheiten aus den Regalen entnommen. Um ein genügend grosses Lagervolumen zu erhalten, müssen die Gänge entsprechend schmal dimensioniert sein. Es lassen sich deshalb in den Gängen nur schwer mehrere Ladevorrichtungen parallel betreiben, wodurch sich insbesondere bei der Entnahme von Waren aus den Regalen Engpässe ergeben.

Die CN 201942318 U zeigt ein in Echtzeit auf einen Einkaufsbefehl reagierendes, automatisches Warenzustellungssystem. Die Warenabfertigung erfolgt durch kugelförmige Vorrichtungen. Geneigt installierte Rinnen sind mit einem geneigt installiert unterirdischen Transportrohr verbunden. Die Bewegung erfolgt durch Schwerkraft ohne Antriebsenergie. Durch eine Hebe-Senk-Vorrichtung werden die Waren ins Gebäude des Endnutzers befördert. Die kugelförmige Vorrichtung ist eine Hohlkugel, die sich öffnen sowie schliessen lässt, deren Kugelwand eine Schaumstruktur, Luftblasenstruktur oder Luftstruktur füllt oder die einen an ein Objekt angepassten Raum aufweist. Zur Identifizierung sind RFID-Tags vorgesehen. Eine Sortieranlage weist eine Matrix auf, wobei sich mit Klappen begrenzte Fächer bewegen lassen.

Die CN 102774596 A beschreibt einen mit einem RFID-Tag versehenen zylinderförmigen Verpackungskörper, der rollend transportiert werden kann. Ein Haltemittel für das Transportguts ist nicht angegeben.

Die BE 1013220A7 beschreibt ein pneumatisches Netzwerk für den Transport von Gütern. Das Netzwerk umfasst Rohre, in welchen Transportkörper wie Kugeln, Zylinder, ineinander verschachtelte Doppelkugeln oder ineinander verschachtelte Doppelzylinder durch pneumatischen Antrieb rollend zirkulieren. Die Transportkörper enthalten Transportgüter wie Pakete, Schüttgüter, Festkörper oder Flüssigkeiten. Ein Transportkörper trägt eine nicht näher spezifizierte Identifikation mit Informationen über dessen Herkunft und dessen Ziel. Es ist eine computergestützte Verwaltung vorgesehen. Ein Haltemittel für die Transportgüter ist nicht beschrieben. Aufgrund von Rohren mit einem rechteckigen Querschnitt ist eine scheibenförmige Bauform eines Rollkörpers erforderlich.

Die JP 2006016044 zeigt einen kugelförmigen Verpackungsbehälter, in welchem mit einer komplizierten Mechanik weitere kugelförmige Behälter derart gelagert sind, dass beim Rollen des kugelförmigen Verpackungsbehälters ein in einem der weiteren Behälter angeordneter, zu transportierender Gegenstand im Wesentlichen horizontal gehalten ist.

Die US 6,050,438 A offenbart eine kugelförmige, dünnwandige, geteilte Kapsel zur Aufnahme eines Artikels oder mehrere Artikel. Die Kapsel kann ohne Zerstörung getrennt werden, wobei die Teile ineinander eingreifende Verschlusselemente aufweisen, die eine stabile Verbindung der Teile bewirken, so dass die Kapsel für den Einsatz in Verkaufsautomaten geeignet ist.

Die GB 2 482 476 A beschreibt einen dünnwandigen Behälter mit rundem Querschnitt. Zwei Wellen sind an der Aussenfläche des Behälters angebracht und fluchten in einer gemeinsamen Achse, die senkrecht zum runden Querschnitt steht. An den Wellen sind Zügel befestigt. Der Behälter kann über Öffnungen befüllt und entleert werden. Wenn an den Zügeln gezogen wird, rollt der Behälter um die gemeinsame Achse. Der Behälter kann kugelförmig oder zylindrisch sein. Der Transport ist auf formlose Flüssigkeiten beschränkt.

Die EP 2 583 934 A1 zeigt ein wieder verwendbares Bierfass mit einem hohlen Fasskörper und einem darin angeordneten Einwegbehälter. Der Fasskörper ist als rollbare Tonne ausgeführt. Beim Befüllen mit Bier expandiert der Einwegbehälter bis dieser die Innenfläche des Fasskörpers berührt. Zum Ausschenken von Bier wird mit Druck beaufschlagtes CO₂ eingesetzt. Der Einwegbehälter wird nach vollständigem Bierausschank ersetzt. Beim Bier handelt es sich um einen formlosen Verpackungsinhalt. Flüssigkeiten haben grundsätzlich keine Form.

Die DE 81 09 898 zeigt eine Münzenhalterung zum Einordnen samt der Münze in einer Tasche eines Münzenalbums. Ein quadratischer Rahmen weist niveaugleich angeordnete, nach innen abstrebende, federnde Münzen-Klemmschenkel auf, wobei Stirnseitenanschläge vorgesehen sind. Der Rahmen ist nicht zum Rollen ausgebildet.

Die JPH01256906 zeigt einen Rahmen für eine Münze in der Form eines Donut mit drei Federn und Halteabschnitten, die sowohl von der Vorder- als auch Rückseite den äusseren Umfang der Münze fixieren. Der Rahmen ist für unterschiedliche Münzen geeignet. Der Rahmen weist eine Öse auf und ist nicht zum Rollen geeignet.

Das Dokument WO 2004/082420 zeigt ein automatisiert transportierbares Gepäckstück. Insbesondere im Flugverkehr ist der Transfer von Gepäckstücken energieaufwändig und teuer. Ein Behälter weist eine zylindrische Lauffläche auf, die zum Rollen des Behälters ausgebildet ist. Zwei ebene Flächen bilden die Seiten des Behälters. Ein Sitz des Behälters ist ausgebildet um ein Gepäckstück aufzunehmen.

Das Dokument BE 1 013 220 zeigt einen zylinderförmigen Behälter für ein Transportgut. Der zylinderförmige Behälter kann auf einer zylinderförmigen Rollfläche abrollen.

Eine Transporthalterung für ein Transportobjekt, welche eine effiziente und einfache Bewirtschaftung eines Warenlagers ermöglicht, ist wünschenswert, aber aus dem Stand der Technik nicht bekannt.

### DARSTELLUNG DER ERFINDUNG

Es ist daher eine Aufgabe der Erfindung, eine Transporthalterung für ein Transportobjekt zu schaffen, welche die gewünschten Eigenschaften aufweist, sowie ein Verfahren zum Transportieren eines Transportobjekts mit einer solchen Transporthalterung anzugeben.

Die Aufgabe wird durch die Merkmale der unabhängigen Ansprüche gelöst.

Die erfindungsgemässe Transporthalterung für ein Transportobjekt umfasst einen Rollkörper mit einer ringförmigen Rollfläche zum Abrollen des Rollkörpers auf einer Unterlage, und Haltemittel zum Halten des Transportobjekts im Rollkörper derart, dass der Rollkörper das Transportobjekt umschliesst. Viele Waren oder in Schachteln verpackte Waren wie beispielsweise Bücher, CD, DVD, etc. ergeben ein Transportobjekt in der Form eines flachen Quaders. Indem die ringförmige Rollfläche der erfindungsgemässen Transporthalterung mit der Form des flachen Quaders in Übereinstimmung gebracht wird, ergibt sich eine Transporthalterung mit einer Bauform, welche insbesondere gegenüber der Kugelform viel weniger Leerraum aufweist. Dadurch wird die Effizienz bei der Bewirtschaftung eines Warenlagers stark verbessert, da insgesamt viel weniger nicht nutzbarer Leeraum besteht.

Es gibt verschiedene Möglichkeiten, einen Rollkörper mit einer ringförmigen Rollfläche auszubilden. Eine ringförmige Rollfläche kann z.B. an einem zylinderförmigen Körper, an einer Hülse, an einem scheibenförmigen Körper, an einem innen und/oder aussen bombierten Ring, an einem Schlauch mit beispielsweise veränderlichem Innendruck, an einem ein- oder doppelwandigen Rotationskörper, etc. ausgebildet sein.

Ferner können mehrere ringförmige Rollflächen z.B. nebeneinander vorgesehen sein, beispielsweise mit unterschiedlichen Breiten. Die ringförmige Rollfläche ist in einer Ausführungsform kreisrund ausgebildet, oder kann von der Kreisform abweichen. Die ringförmige Rollfläche kann eine harte Oberfläche aufweisen, wodurch beim Rollen auf einer harten Unterlage eine geringe Reibung und damit wenig Reibungsverluste entstehen. Die ringförmige Rollfläche kann eine weiche z.B. gummiartige Oberfläche aufweisen, wodurch eine gute Haftung auf einer Unterlage besteht und beispielsweise ein seitliches Rutschen verhindert wird.

Bei einem in der Form eines Schlauchs ausgebildeten Rollkörper kann durch die Wahl des Innendrucks zwischen einer eher harten oder einer eher weichen Rollfläche gewählt werden. Aussendurchmesser und/oder Innendurchmesser sind durch die Wahl des Innendrucks einstellbar, beispielsweise um eine Rollfläche mit einem bestimmten Umfang zu erhalten und/oder um die Transporthalterung an ein Transportobjekt anzupassen.

Eine Ausgestaltung der Transporthalterung ist dadurch gekennzeichnet, dass die Transporthalterung zum stabilen Ablegen auf einer Unterlage ausgebildet ist. Dadurch lässt sich die Transporthalterung flexibler nutzen, da sowohl ein Abrollen auf einer Unterlage als auch ein stabiles Ablegen auf der Unterlage möglich ist. Dadurch wird die Bewirtschaftung eines Warenlagers vereinfacht.

Eine andere Ausgestaltung der Transporthalterung ist dadurch gekennzeichnet, dass die Transporthalterung ausgebildet ist, dass durch ein Kippen der Transporthalterung um ungefähr 90° zwischen dem stabilen Ablegen und dem Abrollen auf einer Unterlage gewählt werden kann. Nur durch Kippen der Transporthalterung um 90° lässt sich diese ganz einfach zum Abrollen oder zum Ablegen auf einer Unterlage einsetzen.

Eine andere Ausgestaltung der Transporthalterung ist dadurch gekennzeichnet, dass der Rollkörper die Form eines Rollrahmens und/oder eine Scheibenform aufweist. Insbesondere beträgt das Verhältnis zwischen einem Durchmesser und einer Breite des Rollkörpers mindestens drei. Die Form eines Rollrahmens und/oder die Scheibenform ermöglicht es, Transportobjekte in der Form eines flachen Quaders besonders effizient zu haltern, da gegenüber einem kugelförmigen Rollkörper nur ein kleiner Leerraum besteht. Ebenso ermöglicht die Form eines Rollrahmens und/oder die Scheibenform, dass die Transporthalterung durch Kippen um 90° sehr einfach zum Abrollen oder zum Ablegen auf einer Unterlage eingesetzt werden kann.

Eine andere Ausgestaltung der Transporthalterung ist gekennzeichnet durch einen schalenförmigen Rollkörper, einen reifenförmigen Rollkörper, einen Rollkörper mit gerader Rollfläche, einen Rollkörper mit stumpfwinkliger Rollfläche, einen Rollkörper mit kurvenförmiger Rollfläche, einen ringförmigen Rollkörper, einen durch einen Halbteile verbindenden Spannring gebildeten Rollkörper, einen felgenförmigen Rollkörper und/oder einen pneuförmigen Rollkörper. Eine Transporthalterung die eines oder mehrere dieser Merkmale aufweist, ermöglicht für bestimmte Waren eine einfachere und effizientere Bewirtschaftung eines Warenlagers, da z.B. die Rollfläche und/oder der Rollkörper an schon bestehende Einrichtungen des Warenlagers angepasst und/oder anpassbar sind.

Eine andere Ausgestaltung der Transporthalterung ist dadurch gekennzeichnet, dass ein Durchmesser des Rollkörpers verstellbar ist. Dadurch lässt sich die Transporthalterung insbesondere an unterschiedliche Warengrössen anpassen und dadurch die Effizienz bei der Bewirtschaftung eines Warenlagers verbessern.

Eine andere Ausgestaltung der Transporthalterung ist dadurch gekennzeichnet, dass die Transporthalterung aus einem einzigen Teil besteht. Dadurch lässt sich die Transporthalterung besonders kostengünstig herstellen, beispielsweise als Wegwerfartikel der zusammen mit dem Transportobjekt zum Kunden ausgeliefert wird, wodurch sich die Effizienz bei der Bewirtschaftung des Warenlagers weiter verbessern lässt.

Eine andere Ausgestaltung der Transporthalterung ist dadurch gekennzeichnet, dass die Transporthalterung aus mehreren Teilen zusammengesetzt ist. Dadurch lässt sich eine Transporthalterung herstellen, welche Merkmale in einer hohen Genauigkeit aufweist, beispielsweise betreffend die Positionierung des Transportobjekts derart, dass beim Rollen der Transporthalterung höhere Geschwindigkeiten möglich sind und dadurch die Effizienz bei der Bewirtschaftung des Warenlagers verbessert wird.

Eine andere Ausgestaltung der Transporthalterung ist dadurch gekennzeichnet, dass der Rollkörper zwei oder mehr Teile umfasst und der Rollkörper zum Öffnen und Schliessen ausgebildet ist. Bei einem geöffneten Rollkörper lässt sich das Transportobjekt einfacher anordnen. Im geschlossenen Rollkörper wird das Transportobjekt sicher gehalten.

Eine andere Ausgestaltung der Transporthalterung ist dadurch gekennzeichnet, dass Schliessmittel zum Schliessen des Rollkörpers vorgesehen sind. Die Schliessmittel gewährleisten, dass der Rollkörper beim Transport, insbesondere beim Rollen, fest verschlossen bleibt.

Eine andere Ausgestaltung der Transporthalterung ist dadurch gekennzeichnet, dass die Haltemittel das Transportobjekt bezüglich des Rollkörpers in einer radialen und/oder in einer axialen Richtung fixieren. Das Transportobjekt ist damit mit der Transporthalterung fix verbunden, wodurch sich beispielsweise die Rolleigenschaften verbessern.

Eine andere Ausgestaltung der Transporthalterung ist dadurch gekennzeichnet, dass die Haltemittel an die Form des Transportobjekts angepasst oder anpassbar sind. Unterschiedliche Transportobjekte lassen sich damit in derselben Transporthalterung anordnen. Eine andere Ausgestaltung der Transporthalterung ist dadurch gekennzeichnet, dass die Haltemittel elastisch ausgebildet sind. Das Transportobjekt wird dadurch vor Schlägen geschont.

Eine andere Ausgestaltung der Transporthalterung ist dadurch gekennzeichnet, dass die Haltemittel einen oder mehrere nach innen gerichtete elastische Arme aufweisen, die das Transportobjekt bezüglich des Rollkörpers in einer radialen Richtung fixieren. Es sind insbesondere mindestens zwei Arme angeordnet. Das Transportobjekt lässt sich einfach in der Transporthalterung anordnen und daraus entnehmen, wobei die elastischen Arme das Transportobjekt zugleich vor Schlägen schützt.

Eine andere Ausgestaltung der Transporthalterung ist dadurch gekennzeichnet, dass der eine oder die mehreren Arme türknaufförmige, U-förmige und/oder V-förmige Fixiermittel aufweisen, die das Transportobjekt bezüglich des Rollkörpers in einer axialen Richtung fixieren. Das Transportobjekt ist in axialer Richtung festhalten, wobei das Anordnen und Entnehmen trotzdem einfach bewerkstelligt werden kann.

Eine andere Ausgestaltung der Transporthalterung ist dadurch gekennzeichnet, dass die Haltemittel starr ausgebildet sind. Das Transportobjekt verschiebt sich unwesentlich gegenüber der Transporthalterung und die Rolleigenschaften der Transporthalterung sind dadurch verbessert.

Eine andere Ausgestaltung der Transporthalterung ist dadurch gekennzeichnet, dass die Haltemittel einen einteiligen oder mehrteiligen Haltekörper umfassen mit einem Inhaltsraum, der an das Transportobjekt angepasst oder anpassbar ist. Durch den Haltekörper ist das Transportobjekt gut geschützt.

Eine andere Ausgestaltung der Transporthalterung ist dadurch gekennzeichnet, dass der Rollkörper auf mindestens einer Seite mit mindestens einem Deckel verschlossen ist oder verschliessbar ist. Der mindestens eine Deckel weist insbesondere mindestens ein Bestandteil der Haltemittel auf. Durch den Deckel ist das Transportobjekt gut geschützt.

Eine andere Ausgestaltung der Transporthalterung ist dadurch gekennzeichnet, dass am Rollkörper ein zusätzliches Rollmittel angeordnet ist. Dieses dient insbesondere zur Verbesserung der Rolleigenschaften. Die Verbesserung der Rolleigenschaften kann die Laufruhe, die Laufgeschwindigkeit, die Stabilität, etc. betreffen.

Eine andere Ausgestaltung der Transporthalterung ist dadurch gekennzeichnet, dass ein Kunststoff, faserverstärkter Kunststoff, Metall, Stahlblech und/oder Karton vorgesehen ist. Dadurch ist die Transporthalterung an Anforderungen wie Kosten, Stabilität, etc. anpassbar.

Eine andere Ausgestaltung der Transporthalterung ist dadurch gekennzeichnet, dass die Transporthalterung derart ausgebildet ist, dass das Transportobjekt von aussen einsehbar ist. Dies erfolgt insbesondere durch eine Öffnung und/oder durch ein Fenster. Manuelle und/oder automatisierte Schritte bei der Handhabung werden dadurch vereinfacht, da das Transportobjekt direkt einsehbar ist und z.B. eine Produktbezeichnung, eine ISBN, ein Barcode, etc. erkennbar ist.

Eine andere Ausgestaltung der Transporthalterung ist dadurch gekennzeichnet, dass ein von aussen abfragbarer Informationsträger angeordnet ist.

Eine andere Ausgestaltung der Transporthalterung ist dadurch gekennzeichnet, dass der von aussen abfragbare Informationsträger ein optisch ablesbarer Barcode und/oder ein funkbasiert auslesbarer RFID-Tag ist.

Im Falle eines RFID-Tags ist optional eine Antenne angeordnet, die sich über einen Umfang des Rollkörpers erstreckt. Insbesondere die automatisierte Handhabung wird dadurch vereinfacht.

Andere Arten von aufgebrachten Codes wie z.B. Matrixcode, Farbcode, Zahlencode, Thermocode oder Hologramme sind ebenfalls als Informations- und/oder Identifikationsmittel oder Sicherheitsmerkmal denkbar. Alle diese Mittel können optisch, magnetisch oder funktechnisch auslesbar sein, und zwar entweder als passive Mittel, die von aussen abgefragt werden, oder als aktive Mittel, die selbst eine Informationsübertragung durchführen.

Die Transporthalterung kann darüber hinaus mit einer eigenen Intelligenz ausgestattet sein, z.B. in Form von elektronischen Mitteln zur Daten- oder Signalverarbeitung, z.B. mit einem Mikroprozessor und entsprechenden Datenspeichern. Zugehörige Sende- und Empfangseinrichtungen können dabei über an der Aussenseite angebrachte Antennenelemente mit der Umgebung drahtlos Signale austauschen. Es ist aber auch denkbar, an bestimmten Stellen der Hülle von aussen zugängliche elektrische Kontakte anzuordnen, über die auf interne Schaltungen zugegriffen werden kann.

Im Zusammenhang mit internen elektronischen Einrichtungen in der Transporthalterung können interne Energiespeicher und/oder Energiewandler vorgesehen werden, die mechanische Energie (Feder, Gasdruck), thermische Energie (Wärmespeicher) oder elektromagnetische Energie (Kondensator, Batterie, Akkumulator, Spule etc.) speichern oder Energie erzeugen (piezoelektrischer Wandler, induktiver Wandler etc.).

Weiterhin ist es denkbar, innerhalb der Transporthalterung Ortungsmittel vorzusehen, mit deren Hilfe sich der Aufenthaltsort der Transporthalterung jederzeit bestimmen und nachverfolgen lässt. Im Extremfall kommt dabei eine Ortsbestimmung mittels des GPS-Systems oder vergleichbarer Systeme in betracht. Auch können innerhalb der Transporthalterung Permanentmagnete angeordnet sein, die von aussen abgefragt werden oder beim Passieren bestimmter Orte Schaltvorgänge auslösen können.

Eine andere Ausgestaltung der Transporthalterung ist dadurch gekennzeichnet, dass mindestens ein Verbindungsmittel ausgebildet ist zum Verbinden der Transporthalterung mit einer oder mehreren entsprechenden Transporthalterung, wobei die miteinander verbundenen Transporthalterungen zum Ablegen und/oder zum Abrollen auf einer Unterlage ausgebildet sind.

Bei einem erfindungsgemässen Verfahren zum Transportieren eines Transportobjekts wird bei einem Ausgangsort das Transportobjekt in einer erfindungsgemässen Transporthalterung angeordnet. Die Transporthalterung wird vom Ausgangsort zu einem Zielort transportiert und beim Zielort wird das Transportobjekt aus der Transporthalterung entnommen. Durch das Rollen auf einer geneigten Unterlage erfolgt der Transport ohne Zuführung externer Energie, indem die potentielle Energie der Transporthalterung genutzt wird.

Eine andere Ausgestaltung des Verfahrens ist dadurch gekennzeichnet, dass das Transportobjekt mit einer Ladevorrichtung in der Transporthalterung angeordnet wird und/oder dass das Transportobjekt mit einer Entladevorrichtung aus der Transporthalterung entnommen wird. Dadurch ist eine vollautomatisierte Bewirtschaftung eines Warenlagers ermöglicht.

Eine andere Ausgestaltung des Verfahrens ist dadurch gekennzeichnet, dass die Transporthalterung zumindest auf einer Teilstrecke zwischen dem Ausgangsort und dem Zielort auf einer oder mehreren Unterlagen gerollt wird. Die Transporthalterung wird insbesondere auf selektierbaren Rollbahnen gerollt. Dadurch ist auf der zumindest einen Teilstrecke der Transport eines Transportobjekts ohne Zuführung von externer Energie ermöglicht.

Eine andere Ausgestaltung des Verfahrens ist dadurch gekennzeichnet, dass die Transporthalterung zumindest auf einer Teilstrecke zwischen dem Ausgangsort und dem Zielort auf einer oder mehreren Transporteinrichtungen auf einer Stellfläche abgelegt transportiert wird. Die Transporthalterung wird insbesondere auf einem Transportband abgelegt transportiert. Die Einbindung der erfindungsgemässen Transporthalterung in bestehende Anlagen ist dadurch ermöglicht.

Eine andere Ausgestaltung des Verfahrens ist dadurch gekennzeichnet, dass die Transporthalterung zwischen dem Ausgangsort und dem Zielort in einer Lagervorrichtung zwischengelagert wird. In einem Warenlager können Lagereinrichtungen in einer beliebigen Anzahl und mit einem beliebigen Speichervolumen nach Bedarf angeordnet werden.

Eine andere Ausgestaltung des Verfahrens ist dadurch gekennzeichnet, dass die entleerte Transporthalterung vom Zielort zum Ausgangsort zurück transportiert wird, insbesondere auf einer oder mehreren Rollbahnen und/oder einer oder mehreren Transporteinrichtungen vom Zielort zum Ausgangsort zurück gerollt und/oder zurücktransportiert wird.

Die Transporthalterung ist wieder verwendbar und kann gleich nach dem Entleeren einer Wiederbefüllung zugeführt werden.

Eine andere Ausgestaltung des Verfahrens ist dadurch gekennzeichnet, dass beim Ausgangsort mehrere Transporthalterungen miteinander verbunden werden, wobei die mehreren Transporthalterungen vom Ausgangsort zum Zielort miteinander abgestellt transportiert und/oder zusammen abgerollt werden, und wobei am Zielort die mehreren Transporthalterungen voneinander gelöst werden. Durch den gleichzeitigen Transport mehrerer Transporteinrichtungen können Transportkapazitäten besser genutzt werden.

Die Aussenfläche der Transporthalterung ist diejenige Fläche, mit der die Transporthalterung auf einer Unterlage abrollt. Sie sollte daher eine ausreichende Härte aufweisen, um den beim Rollvorgang auftretenden, reibenden und/oder stossenden Belastungen über einen ausreichend langen Benutzungszeitraum gewachsen zu sein.

Die Aussenfläche der Transporthalterung kann glatt ausgebildet sein, kann aber auch Noppen oder lokale Dellen wie bei einem Golfball aufweisen, um bestimmte Lauf- oder Abrolleigenschaften hervorzurufen. Des Weiteren können, wenn eine Rollbarkeit in beliebigen Richtungen nicht erwünscht ist, auf der Aussenseite ein oder mehrere umlaufende Führungswülste vorgesehen werden, die der Rollbewegung eine bestimmte Vorzugsrichtung geben.

Als Materialien kommen insbesondere geeignete Kunststoffe in Frage, die unterschiedliche Grade von Durchsichtigkeit aufweisen aber auch vollkommen undurchsichtig sein können. In Einzelfällen ist es auch denkbar, als Material für.die Hülle ein widerstandsfähiges Glas einzusetzen, wie es z.B. ähnlich bei Mehrweg-Getränkeflaschen verwendet wird. In besonderen Fällen kann die Transporthalterung aber auch aus einem geeigneten Metall oder einer Metalllegierung aufweisen, wenn z.B. thermische oder elektromagnetische, insbesondere z.B. Abschirm-Eigenschaften, von Bedeutung sind.

Sofern die Transporthalterung von seiner Art her undurchsichtig ist, kann an bestimmten Stellen eine lokale Einsehbarkeit des Inneren vorgesehen werden, indem Sichtfenster angebracht werden.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: in einer Aufsicht eine Transporthalterung mit einem schalenförmigen Rollkörper, an dessen Innenseite insgesamt sechs nach innen gerichtete elastische Arme mit einem türknaufförmigen Fixiermittel zum Fixieren eines Transportobjekts befestigt sind;
- Fig. 2: in einem Querschnitt die Transporthalterung aus Figur 1 gemäss dem Schnitt A-A;
- Fig. 3: in einer Aufsicht die Transporthalterung aus Figur 1, wobei ein Transportobjekt in der Transporthalterung gehalten ist;
- Fig. 4: in einem Querschnitt die Transporthalterung aus Figur 3 gemäss dem Schnitt B-B;
- Fig. 5: in einer Sicht von unten ein Ende eines nach innen gerichteten elastischen Arms mit einem türknaufförmigen Fixiermittel zum Fixieren des Transportobjekts;
- Fig. 6: in einer Aufsicht eine Transporthalterung mit einem schalenförmigen Rollkörper, an dessen Innenseite insgesamt acht nach innen gerichtete elastische Arme mit einem türknaufförmigen Fixiermittel zum Fixieren eines Transportobjekts befestigt sind;
- Fig. 7: in einem Querschnitt die Transporthalterung aus Figur 6 gemäss dem Schnitt B-B;
- Fig. 8: in einer Aufsicht eine Transporthalterung mit einem reifenförmigen Rollkörper, an dessen Innenseite insgesamt vier nach innen gerichtete elastische Arme mit einem U-förmigen Fixiermittel zum Fixieren eines Transportobjekts befestigt sind;
- Fig. 9: in einem Querschnitt die Transporthalterung aus Figur 8 gemäss dem Schnitt C-C;
- Fig. 10: in einer Seitenansicht die Transporthalterung aus Figur 8 und Figur 9;
- Fig. 11: jeweils in einem Querschnitt Varianten a) - f) mit Transporthalterungen für ein Transportobjekt;
- Fig. 12: in einem Querschnitt eine schematisch dargestellte Transporthalterung mit einem schalenförmigen Rollkörper der mit einem Deckel verschlossen ist, wobei V-förmige Fixiermittel zum Fixieren des Transportobjekts vorgesehen sind;
- Fig. 13: in einem Querschnitt eine schematisch dargestellte Transporthalterung mit einem schalenförmigen Rollkörper, wobei L-förmige Fixiermittel und gegebenenfalls ein Fixierkörper zum Fixieren des Transportobjekts vorgesehen sind;
- Fig. 14: in einem Querschnitt eine schematisch dargestellte Transporthalterung mit einem reifenförmigen Rollkörper, wobei U-förmige Fixiermittel zum Fixieren des Transportobjekts vorgesehen sind;
- Fig. 15: in einem Querschnitt eine schematisch dargestellte Transporthalterung mit einem reifenförmigen Rollkörper der eine stumpfwinklige Lauffläche aufweist, wobei U-förmige Fixiermittel zum Fixieren des Transportobjekts sowie beidseitig Deckel zum Verschliessen des reifenförmigen Rollkörpers vorgesehen sind;
- Fig. 16: in einem Querschnitt eine schematisch dargestellte Transporthalterung mit einem reifenförmigen Rollkörper, der eine gekrümmte Lauffläche aufweist, wobei U-förmige Fixiermittel zum Fixieren des Transportobjekts vorgesehen sind;
- Fig. 17: in einem Querschnitt eine schematisch dargestellte Transporthalterung mit einem reifenförmigen Rollkörper, der eine gekrümmte Lauffläche aufweist, wobei ein Hohlraum an die Lauffläche anschliesst, und wobei U-förmige Fixiermittel zum Fixieren des Transportobjekts vorgesehen sind;
- Fig. 18: in einem Querschnitt eine schematische Darstellung von drei aufeinander gestapelten Transporthalterungen, in welchen je ein Transportobjekt gehalten ist;
- Fig. 19: in einem Querschnitt eine horizontal angeordnete Transporteinrichtung mit einer darauf abgelegten Transporthalterung;
- Fig. 20: in einem Querschnitt eine geneigte Transporteinrichtung, auf welcher eine Transporthalterung abgelegt ist;
- Fig. 21: in einem Querschnitt mehrere geneigte Unterlagen, eine geneigte Transporteinrichtung sowie eine Lagervorrichtung;
- Fig. 22: in einer Aufsicht eine Transporthalterung mit darin angeordnetem Transportobjekt, wobei die Transporthalterung aus einem reifenförmigen Rollkörper mit zwei Teilen besteht, die mit einem Scharnier verbunden sind und aufgeklappt werden können, wobei an den Innenseiten insgesamt zwei nach innen gerichtete elastische Arme mit einem U-förmigen Fixiermittel zum Fixieren eines Transportobjekts befestigt sind;
- Fig. 23: in einem Querschnitt die Transporthalterung aus Figur 22 gemäss dem Schnitt D-D; und
- Fig. 24: in einer Aufsicht die Transporthalterung aus Figur 22 und Figur 23, wobei die beiden Teile aufgeklappt sind und das Transportobjekt daraus entnommen ist.

### WEGE ZUR AUSFÜHRUNG DER ERFINDUNG

Die Erfindung befasst sich mit einer Transporthalterung 1 für ein Transportobjekt 7. Die Transporthalterung 1 weist einen Rollkörper 2 mit einer ringförmigen Rollfläche auf, die zum Abrollen auf einer Unterlage ausgebildet ist. Es sind Haltemittel 31, ..., 38, 41, ..., 48 vorgesehen, um das Transportobjekt 7 zu halten. Das Transportobjekt 7 wird vom Rollkörper 2 umschlossen. Das Transportobjekt 7 ist im Innern des Rollkörpers 2 aufgenommen und ist durch die Haltemittel 31, ..., 38, 41, ..., 48 darin positioniert.

Da das Transportobjekt 7 vom Rollkörper 2 umschlossen ist, kann die Transporthalterung 1 mit dem darin gehaltenen Transportobjekt 7 auf einer Unterlage gerollt werden, ohne dass das Transportobjekt 7 mit der Unterlage in Berührung kommt und das Rollen durch eine Berührung des Transportobjekts 7 mit der Unterlage gestört oder unterbrochen würde.

Auf einer geneigten Unterlage kann das Rollen der Transporthalterung 1 von einem Ausgangsort zu einem tiefer gelegenen Zielort aufgrund der Schwerkraft ohne die Zuführung von Energie erfolgen. Da der Rollwiderstand insbesondere eines starren oder harten Rollkörpers 2 auf einer starren oder harten Unterlage gering ist, können durch das Rollen der Transporthalterung 1 auf der Unterlage auch grössere Distanzen ohne die Zuführung von Energie überwunden werden.

Die Aussenfläche der Transporthalterung ist diejenige Fläche, mit der die Transporthalterung auf einer Unterlage abrollt. Sie sollte daher eine ausreichende Härte aufweisen, um den beim Rollvorgang auftretenden, reibenden und/oder stossenden Belastungen über einen ausreichend langen Benutzungszeitraum gewachsen zu sein.

Die Aussenfläche der Transporthalterung kann glatt ausgebildet sein, kann aber auch Noppen oder lokale Dellen wie bei einem Golfball aufweisen, um bestimmte Lauf- oder Abrolleigenschaften hervorzurufen. Des Weiteren können, wenn eine Rollbarkeit in beliebigen Richtungen nicht erwünscht ist, auf der Aussenseite ein oder mehrere umlaufende Führungswülste vorgesehen werden, die der Rollbewegung eine bestimmte Vorzugsrichtung geben.

Als Materialien kommen insbesondere geeignete Kunststoffe in Frage, die unterschiedliche Grade von Durchsichtigkeit aufweisen aber auch vollkommen undurchsichtig sein können. In Einzelfällen ist es auch denkbar, als Material für die Hülle ein widerstandsfähiges Glas einzusetzen, wie es z.B. ähnlich bei Mehrweg-Getränkeflaschen verwendet wird. In besonderen Fällen kann die Transporthalterung aber auch aus einem geeigneten Metall oder einer Metalllegierung aufweisen, wenn z.B. thermische oder elektromagnetische, insbesondere z.B. Abschirm-Eigenschaften, von Bedeutung sind.

Sofern die Transporthalterung von seiner Art her undurchsichtig ist, kann an bestimmten Stellen eine lokale Einsehbarkeit des Inneren vorgesehen werden, indem Sichtfenster angebracht werden.

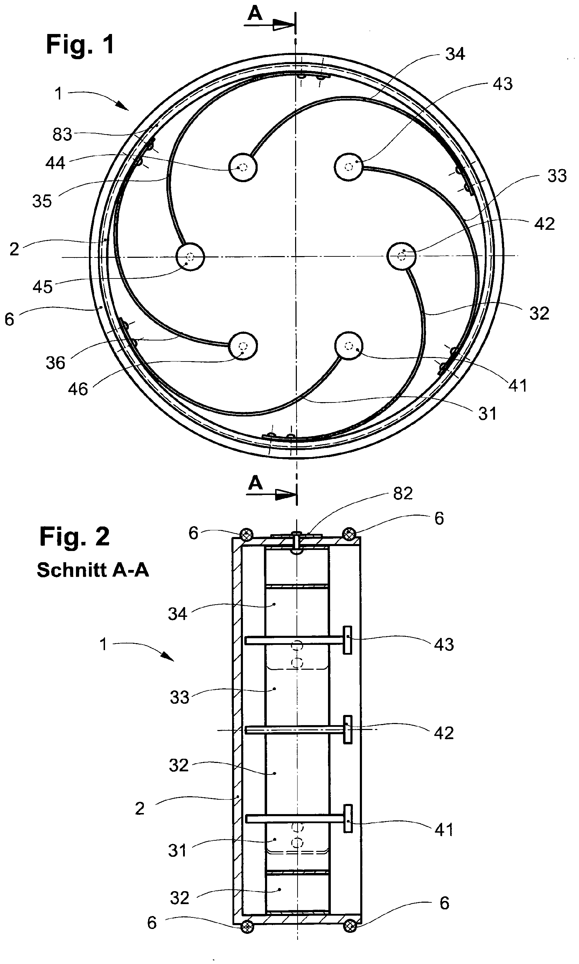

Figur 1 zeigt in einer Aufsicht schematisch eine Ausführungsvariante einer Transporthalterung 1. Figur 2 zeigt schematisch einen Querschnitt der Transporthalterung aus Figur 1 gemäss dem Schnitt A-A.

Der Rollkörper 2 der Transporthalterung 1 gemäss Figuren 1 und 2 ist schalenförmig ausgeführt. Der schalenförmige Rollkörper 2 weist einen Schalenboden auf, welcher in der Figur 2 auf der linken Seite angeordnet ist, und einen Schalenrand, der die ringförmige Rollfläche zum Abrollen des schalenförmigen Rollkörpers 2 auf einer Unterlage aufweist.

Der Schalenboden ist als Fläche geeignet, um den Rollkörper 2 und damit die Transporthalterung 1 stabil auf einer Unterlage abzulegen. Die Unterlage kann irgendeine Fläche betreffen, wie z.B. eine Lagerfläche, die Fläche eines Transportbands, etc. Die Unterlage kann durch eine Transporthalterungen 1 mit passenden konstruktiven Merkmalen gebildet sein, wodurch sich mehrere Transporthalterungen 1 stapeln lassen.

Zwischen dem Schalenboden, welcher zum Ablegen der Transporthalterung 1 geeignet ist, und dem Schalenrand, welcher eine ringförmige Rollfläche aufweist, ist ein Winkel von ungefähr 90° gebildet. Durch Kippen einer auf dem Schalenboden abgelegten Transporteinheit 1 um 90° wird das Rollen der Transporteinheit 1 ermöglicht.

Die vorteilhafte Eigenschaft, dass zwischen einer Fläche zum Ablegen der Transporthalterung 1 und der Rollfläche der Transporthalterung ein Winkel von ungefähr 90° gebildet ist und deshalb für eine abgelegte Transporteinheit 1 durch Kippen um 90° das Rollen ermöglicht wird, respektive für eine auf der Rollfläche abgestützte Transporteinheit 1 durch Kippen um 90° das Hinlegen ermöglicht wird, ergibt sich auch für weitere der hier beschriebenen Ausführungsformen von Transporteinheiten 1.

Als Haltemittel 31, ..., 36, 41, ..., 46 sind an der Innenseite der Schalenränder auf dem Innenumfang verteilt insgesamt sechs elastische Arme 31, ..., 36 angeordnet, an deren Enden Fixiermittel 41, ..., 46 in der Form eines Türknaufs angeordnet sind.

Um ein Transportobjekt 7 in der Transporthalterung 1 anzuordnen, werden die elastischen Arme 31, ..., 36 in Richtung des Schalenrandes gespreizt. Nachdem das Transportobjekt 7 dazwischen angeordnet ist, wird die Spreizung der elastischen Arme 31, ..., 36 aufgehoben, wodurch sich die elastischen Arme an das Transportobjekt 7 anlegen und dieses in Bezug auf den schalenförmigen Rollkörper 2 in radialer Richtung gehalten werden.

Durch den Knauf der türknaufartigen Fixiermittel 41, ..., 46 und den Schalenboden des schalenförmigen Rollkörpers 2 wird das Transportobjekt 7 in axialer Richtung fixiert.

Die elastischen Arme 31, ..., 36 können beispielsweise mit Nieten, Schrauben oder irgendeinem anderen Befestigungsmittel am Schalenrand des schalenförmigen Rollkörpers 2 befestigt sein.

Am Aussenumfang des Schalenrands des schalenförmigen Rollkörpers 2 ist optional ein von aussen abfragbarer Informationsträger angebracht, wie beispielsweise ein optisch ablesbarer Barcode oder ein funkbasiert auslesbarere RFID-Tag 82. In einer Variante ist am Umfang des Rollkörpers 2 eine Antenne 83 des RFID-Tags 82 vorgesehen. Aufgrund der relativ grossen Dimensionen der Antenne 83, lässt sich der RFID-Tag 82 auch aus grösseren Distanzen auslesen.

Die erwähnten von aussen abfragbare Informationsträger lassen sich auch für weitere hier beschriebene Ausführungsvarianten von Rollkörpern 2 respektive Transporthalterungen 1 verwenden.

Andere Arten von aufgebrachten Codes wie z.B. Matrixcode, Farbcode, Zahlencode, Thermocode oder Hologramme sind ebenfalls als Informations- und/oder Identifikationsmittel oder Sicherheitsmerkmal denkbar. Alle diese Mittel können optisch, magnetisch oder funktechnisch auslesbar sein, und zwar entweder als passive Mittel, die von aussen abgefragt werden, oder als aktive Mittel, die selbst eine Informationsübertragung durchführen.

Die Transporthalterung kann darüber hinaus mit einer eigenen Intelligenz ausgestattet sein, z.B. in Form von elektronischen Mitteln zur Daten- oder Signalverarbeitung, z.B. mit einem Mikroprozessor und entsprechenden Datenspeichern. Zugehörige Sende- und Empfangseinrichtungen können dabei über an der Aussenseite angebrachte Antennenelemente mit der Umgebung drahtlos Signale austauschen. Es ist aber auch denkbar, an bestimmten Stellen der Hülle von aussen zugängliche elektrische Kontakte anzuordnen, über die auf interne Schaltungen zugegriffen werden kann.

Im Zusammenhang mit internen elektronischen Einrichtungen in der Transporthalterung können interne Energiespeicher und/oder Energiewandler vorgesehen werden, die mechanische Energie (Feder, Gasdruck), thermische Energie (Wärmespeicher) oder elektromagnetische Energie (Kondensator, Batterie, Akkumulator, Spule etc.) speichern oder Energie erzeugen (piezoelektrischer Wandler, induktiver Wandler etc.).

Weiterhin ist es denkbar, innerhalb der Transporthalterung Ortungsmittel vorzusehen, mit deren Hilfe sich der Aufenthaltsort der Transporthalterung jederzeit bestimmen und nachverfolgen lässt. Im Extremfall kommt dabei eine Ortsbestimmung mittels des GPS-Systems oder vergleichbarer Systeme in betracht. Auch können innerhalb der Transporthalterung Permanentmagnete angeordnet sein, die von aussen abgefragt werden oder beim Passieren bestimmter Orte Schaltvorgänge auslösen können.

Wie aus Figur 1 und 2 ersichtlich, ist am Aussenumfang des Schalenrandes eines oder mehrere optionale Rollmittel 6 angebracht, welches dazu dient, die Rolleigenschaften zu verbessern.

Die Rolleigenschaften werden durch die Rollmittel 6 beispielsweise dadurch verbessert, dass die Rollfläche und damit der Rollwiderstand verkleinert werden. Es kann ferner genügend Platz geschaffen werden für aussen am Schalenrand angebrachte Befestigungsmittel zur Befestigung der elastischen Arme 31, ..., 36 und/oder für einen aussen am Schalenrand angebrachten RFID-Tag 82.

Wie aus Figur 2 ersichtlich, umfassen die Rollmittel 6 beispielsweise zwei O-Ringe, die in entsprechenden Nuten des Schalenrandes angeordnet sind.

Die erwähnten zusätzlichen Rollmittel 6 lassen sich auch für weitere hier beschriebene Ausführungsvarianten der Rollkörper 2 verwenden.

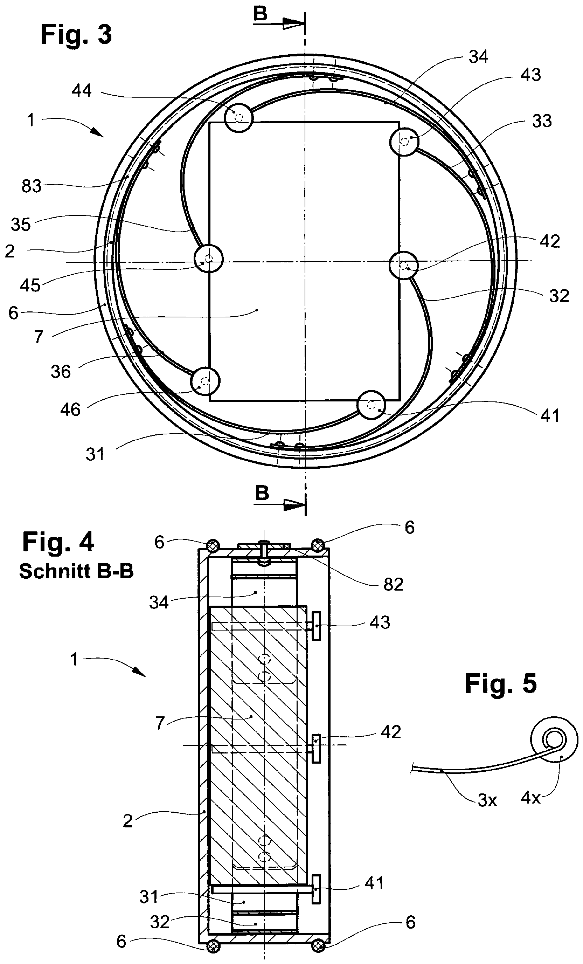

Figur 3 zeigt in einer Aufsicht schematisch eine Ausführungsvariante einer Transporthalterung 1 gemäss Figur 1, wobei ein Transportobjekt 7 darin gehalten ist. Figur 4 zeigt schematisch einen Querschnitt der Transporthalterung aus Figur 3 gemäss dem Schnitt B-B. Das Transportobjekt 7 hat eine rechteckige Form, wie beispielsweise die Form eines Buches, die Form einer Verpackung für einen elektronischen Datenträger, etc.

Wie aus Figur 3 ersichtlich, ist das Transportobjekt 7 durch die elastischen Arme 31, ... 36 in radialer Richtung fixiert.

Wie aus Figur 4 ersichtlich, ist das Transportobjekt 7 in axialer Richtung durch den Schalenboden des schalenförmigen Rollkörpers 2 sowie durch die in der Form eines Türknaufs ausgebildeten Fixiermittel 41, ..., 46 in axialer Richtung fixiert.

Figur 5 zeigt einen elastischen Arm 3x und ein Fixiermittel 4x in einer Detailansicht, wie sie sich in einer Ansicht vom Schalenboden in Richtung des elastischen Arms 3x und der Fixiermittel 4x ergibt. Das Ende des Arms 3x, welcher die Form eines Bandes aufweist, ist als Schlaufe ausgebildet, in welcher ein Stift des in der Form eines Türknaufs ausgebildeten Fixiermittels 4x eingeklemmt ist.

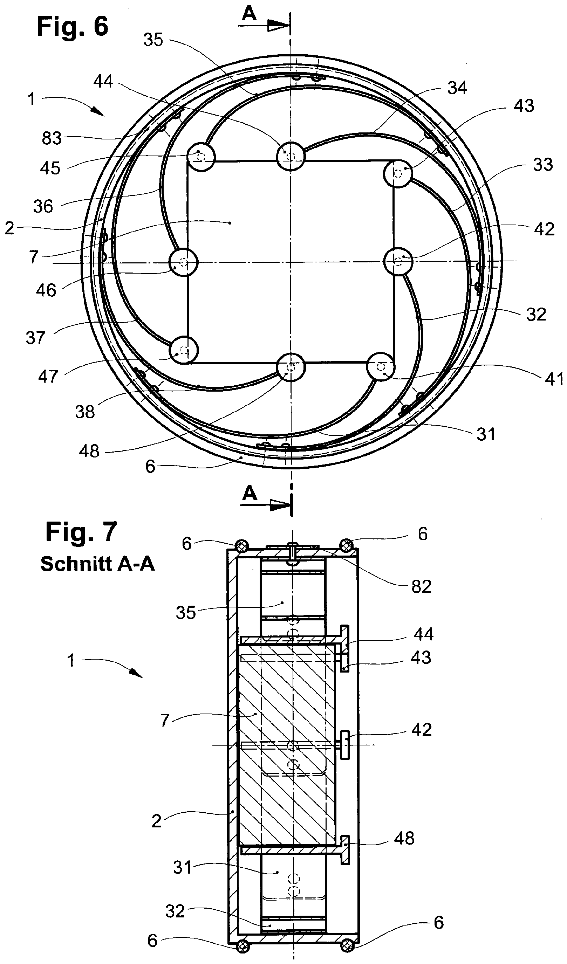

Figur 6 zeigt in einer Aufsicht schematisch eine weitere Ausführungsvariante einer Transporthalterung 1. Figur 7 zeigt schematisch einen Querschnitt der Transporthalterung aus Figur 6 gemäss dem Schnitt A-A.

Wie aus Figur 6 und 7 ersichtlich, weist die weitere Ausführungsvariante der Transporthalterung 1 insgesamt acht elastische Arme 31, ..., 38 und acht in der Form eines Türknaufs ausgebildete Fixiermittel 41, ..., 48 auf. Das Transportobjekt 7 hat eine quadratische Form, wie beispielsweise die Form einer Verpackung einer CD, etc.

In der weiteren Ausführungsvariante einer Transporthalterung 1 gemäss Figuren 6 bis 7 wird das Transportobjekt 7 an mehr Punkten in radialer sowie axialer Richtung fixiert als in der Ausführungsvariante einer Transporthalterung 1 gemäss Figur 1 bis 4. Dadurch ergeben sich bei gleicher Wirkung kleinere Kräfte, welche durch die Haltemittel 31, ..., 38, 41, ..., 48 auf das Transportobjekt 7 wirken und somit eine schonendere Halterung.

Der Rollkörper 2 der hier dargestellten Transporteinheiten 1 kann beispielsweise einen Kunststoff, ein Metall oder irgendein anderes Material aufweisen, welches geeignet ist, ein Rollen auf einer Unterlage und ein Umschliessen des Transportobjekts 7 zu ermöglichen.

Die elastischen Arme 31, ..., 36 der hier dargestellten Transporthalterungen 1 können beispielsweise einen Federstahl, einen Kunststoff oder irgendein anderes Material aufweisen, welches geeignet ist, eine Spreizung der Arme 31, ..., 36 und eine Fixierung des Transportobjekts 7 in radialer Richtung zu ermöglichen.

In einer Variante bestehen eine oder mehrere der hier dargestellten Transporthalterungen 1 aus einem einzelnen Teil und sind beispielsweise in einem Spritzgiessverfahren aus einem Kunststoff hergestellt. Dies ermöglicht insbesondere die Herstellung von kostengünstigen Transporthalterungen 1.

In einer Variante sind eine oder mehrere der hier dargestellten Transporthalterungen 1 aus mehreren Stücken zusammengesetzt, beispielsweise aus einem Rollkörper 2 umfassend einen Kunststoff und aus Haltemittel 31, ..., 36, 41, ... 48 umfassend ein Metall. Dies ermöglicht insbesondere die Herstellung von Transporthalterungen 1 mit an eine bestimmte Anwendung angepassten Rolleigenschaften des Rollkörpers 2 und/oder angepassten Halteeigenschaften der Haltemittel 31, ..., 36, 41, ..., 46.

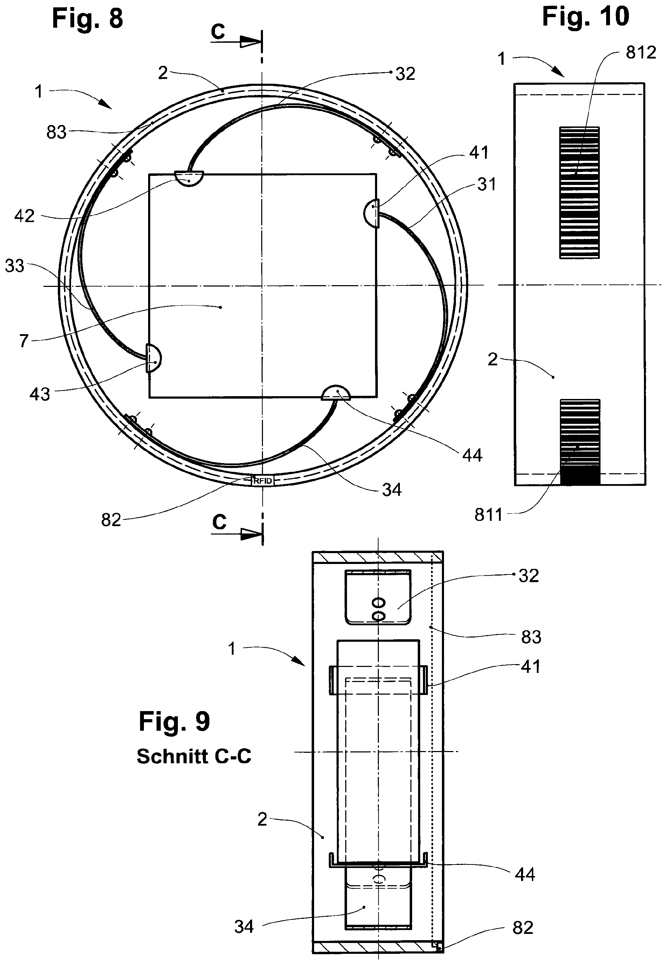

Figur 8 zeigt in einer Aufsicht schematisch eine weitere Ausführungsvariante einer Transporthalterung 1. Figur 9 zeigt schematisch einen Querschnitt der Transporthalterung 1 aus Figur 8 gemäss dem Schnitt C-C. Das Transportobjekt 7 hat eine quadratische Form. Der Rollkörper 2 ist im Gegensatz zu den vorangegangenen Figuren nicht schalenförmig, sondern reifenförmig ausgebildet, d.h. der Rollkörper 2 weist zwei Öffnungen auf, welche in Figur 9 links und rechts angeordnet sind. Auf der Aussenseite des reifenförmigen Rollkörpers befindet sich die ringförmige Rollfläche. Im Gegensatz zu den vorangegangen Figuren erfolgt die Fixierung des Transportobjekts 7 in einer der beiden axialen Richtung nicht durch einen Schalenboden des schalenförmigen Rollkörpers 2, sondern in beiden axialen Richtungen durch die U-förmig ausgebildeten Fixiermittel 41, ..., 44.

Die hier dargestellten Rollkörper weisen die Form eines Rollrahmens oder einer Scheibe auf, wobei beim Rollen eine Drehung um eine Drehachse erfolgt. Die radiale Richtung bezeichnet die Richtung ungefähr senkrecht von der Drehachse weg oder auf die Drehachse zu, während die axiale Richtung die Richtung entlang der Drehachse bezeichnet.

Wie aus Figur 8 und 9 ersichtlich, weist die weitere Ausführungsvariante der Transporthalterung 1 insgesamt vier elastische Arme 31, ..., 34 und vier U-förmig ausgebildete Fixiermittel 41, ..., 44 auf. Wie aus Figur 8 ersichtlich, können die U-förmigen Fixiermittel an den Enden halbkreisförmig ausgebildet sein, wodurch das Risiko vermindert wird, beim Fixieren des Transportobjekts 7 dieses zu beschädigen. Die Enden der U-förmigen Fixiermittel können andere Formen wie quadratisch, rechteckig, dreieckig, etc. aufweisen.

Die Transporthalterung 1 gemäss Figur 8 und 9 ist derart ausgebildet, dass die Aussenfläche des Rollkörpers 2, welche die Rollfläche bildet, befreit ist von hervorstehenden Nieten, Schrauben, etc. zur Befestigung der elastischen Arme 31, ..., 34. Dementsprechend sind keine zusätzlichen Rollmittel vorgesehen in der weitern Ausführungsvariante einer Transporthalterung 1 gemäss Figur 8 und 9. Selbstverständlich können Rollmittel zur Verbesserung der Rolleigenschaften trotzdem angebracht werden, falls erwünscht.

Wie aus Figur 8 ersichtlich, weist der Rollkörper 2 einen von aussen abfragbarer Informationsträger in der Form eines RFID-Tags 82 auf. Der RFID-Tag 82 ist beispielsweise an der Innenseite des Rollkörpers 2 angebracht oder im Rollkörper 2 integriert. Ferner weist der Rollkörper 2 eine Antenne 83 auf, welche mit dem RFID-Tag 82 verbunden ist. Die Antenne 83 kann entsprechend dem Rollkörper 2 relativ gross dimensioniert werden, womit die Distanz erhöht werden kann, aus welcher mit einem RFID-Lese-/Schreibgerät vom RFID-Tag 82 Informationen und Daten ausgelesen und/oder geschrieben werden können.

Figur 10 zeigt in einer Seitenansicht schematisch die Transporthalterung 1 aus Figur 8. An der Aussenfläche sind von aussen abfragbarer Informationsträger in der Form optisch ablesbarer Barcodes 811, 812 angebracht. Durch mehrere Barcodes wird das Abfragen von Informationen und Daten gegenüber einem einzelnen Barcode vereinfacht, da bei einem einzelnen Barcode dieser beim Ablesen gerade im Wesentlichen im Kontakt mit der Unterlage sein kann auf welcher der Rollkörper 2 abrollt und deshalb das Ablesen von Informationen und Daten vom Barcode erschwert oder unmöglich ist. Es können insbesondere 1-dimensionale und/oder 2-dimensionale Barcodes angebracht sein.

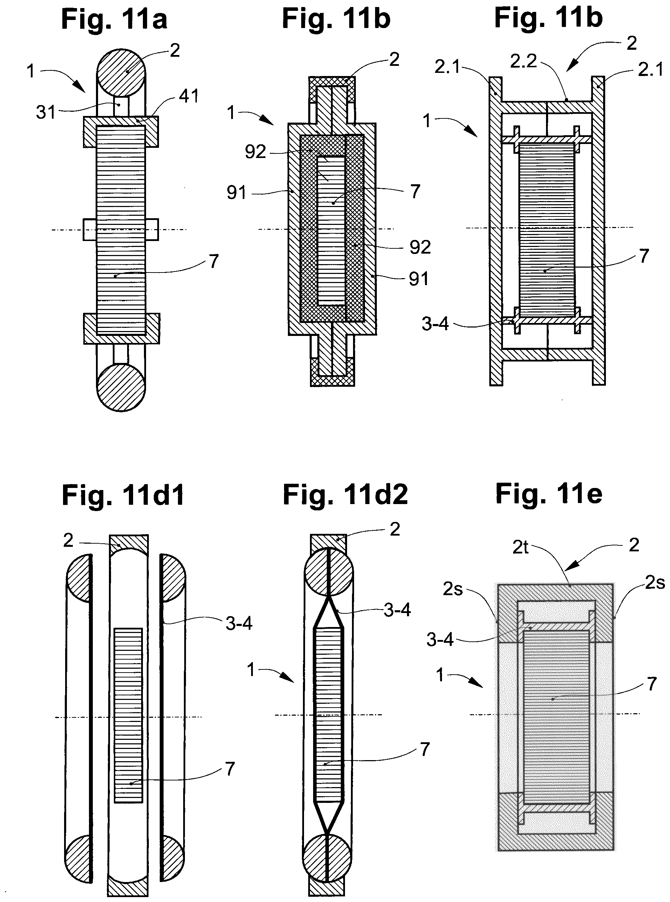

Figur 11 zeigte weitere Varianten a) - e) von Transporthalterungen 1.

Figur 11 a) zeigt in einem Querschnitt eine Transporthalterung 1 die einen ringförmigen Rollkörper 2 aufweist. Auf der Aussenseite des ringförmigen Rollkörpers befindet sich die ringförmige Rollfläche. Am ringförmigen Rollkörper 2 sind an der Innenseite wie in den vorherigen Figuren dargestellt mehrere elastische Arme 31 angebracht, welche Fixiermittel 41 mit einer beidseitig ausgebildeten türknaufartigen Form aufweisen. Die Transporteinheit 1 kann sich aufgrund des ringförmigen Rollkörpers 2 quer zur Rollrichtung leicht neigen, wobei die Auflagefläche auf einer Unterlage stets ungefähr gleich bleibt und der Rollwiderstand somit im Wesentlichen gleich bleibt. Die Transporteinheit 1 gemäss Figur 11 a) weist zudem Bauteile mit einem geringen Volumen und somit ein geringes Gewicht auf. Durch die elastischen Arme lässt sich das Transportobjekt 7 leicht in der Transporthalterung 1 anordnen und wieder entfernen.

Figur 11 b) zeigt in einem Querschnitt eine Transporthalterung 1 die zwei Halbschalen 91 aufweist, welche mit einem als Spannring ausgeführten Rollkörper 2 miteinander verbunden werden. In den Halbschalen 91 sind starre Einlagen 92 angeordnet, welche das Transportobjekt 7 halten. Die Halbschalen 91 bilden zusammen mit den Einlagen 92 einen mehrteiligen Haltekörper, um das Transportobjekt im als Spannring ausgeführten Rollkörper 2 zu halten. Die Aussenfläche des als Spannring ausgeführten Rollkörpers 2 bildet die ringförmige Rollfläche. Die Einlagen 92 sind beispielsweise aus einem Schaumstoff, einem Kunststoff, etc. hergestellt. Die Halbschalen 91 sind beispielsweise aus einem Metall, Kunststoff, etc. hergestellt. Der als Spannring ausgeführte Rollkörper 2 weist eine relativ kleine Rollfläche und somit einen relativ geringen Rollwiderstand auf. Durch die Halbschalen 91 und Einlagen 92 ist das Transportobjekt 7 während dem Transport sehr gut geschützt. Zwischen den Halbschalen 91 kann eine Dichtung vorgesehen sein, um den Schutz des Transportobjekts 7 zusätzlich zu verbessern, insbesondere gegenüber Flüssigkeiten oder Gasen. Der Spannring kann in einer Ausführungsform als Manschette ausgeführt sein, beispielsweise als dehnbare Manschette, als eine aus Gummi hergestellte Manschette, etc.

Figur 11 c) zeigt in einem Querschnitt eine Transporthalterung 1 die einen Rollkörper 2 mit einer felgenförmige Kontur aufweist. Der Rollkörper 2 ist beispielsweise durch zwei spiegelsymmetrische Halteile gebildet, welche durch in der Figur 11 c) nicht näher dargestellte Verbindungsmittel verbindbar sind. Wie aus Figur 11 c) ersichtlich, hat der Rollkörper 2 die Form in der Art einer Felge, wobei wie aus Figur 11 c) ersichtlich beidseits eines Mittelteils 2.2 links und rechts eine Art Kranz 2.1 angeordnet ist. Je nach Unterlage kann das Mittelteil 2.2 oder die beiden Kränze die ringförmige Rollfläche zum Abrollen des Rollkörpers 2 auf der Unterlage bilden. Auf einer ebenen Unterlage kann der Rollkörper 2 beispielsweise auf den Kränzen 2.1 abrollen. Auf einer schienenförmigen Unterlage kann der Rollkörper 2 beispielsweise auf dem Mittelteil 2.2 abrollen. Das Transportobjekt 7 ist im Innern des felgenförmigen Rollkörpers 2 angeordnet und durch die Haltemittel 3-4 gehalten, welches beispielsweise an den spiegelsymmetrischen Halbteilen befestigbar sind. Der felgenförmige Rollkörper 2 kann vollständig geschlossen ausgeführt sein und das Transportobjekt 7 dadurch gut schützen. Es kann wiederum ein Dichtmittel vorgesehen sein, um einen zusätzlichen Schutz zu bieten, insbesondere gegen Flüssigkeiten und/oder Gasen. Der felgenförmige Rollkörper 2 kann zur seitlichen Stabilisierung oben an einem Führungskörper geführt sein, der zwischen den Kränzen 2.1, 2.2 angeordnet ist und dazu geeignet ist, dass darauf ein weiterer felgenförmiger Rollkörper 2 abrollbar ist.

Figuren 11 d1) und d2) zeigt in einem Querschnitt eine Transporthalterung 1 die einen ringförmigen Rollkörper 2 aufweist, an welchem ein in der Form eines Netzes, einer Folie, etc.. ausgebildetes Haltemittel 3-4 angeordnet ist. In der Figur 11 d1) links ist die Transporthalterung 1 in geöffnetem Zustand dargestellt. In der Figur 11 d2) rechts ist die Transporthalterung 1 im geschlossenen Zustand dargestellt. Der ringförmige Rollkörper 2 lässt sich wie links dargestellt in zwei Halbringe auftrennen, an welchen je ein Netz, eine Folie, etc. angeordnet ist, das in der kreisförmigen Öffnung des jeweiligen Halbrings aufgespannt ist. Das Transportobjekt 7 ist zwischen den beiden Halbringen angeordnet und wird vom Haltemittel 3-4 gehalten, sobald die beiden Halbringe wie in Figur 11 d2) rechts dargestellt zum ringförmigen Rollkörper 2 zusammengefügt werden. Die ringförmige Rollfläche ist an der Aussenseite der zusammengesetzten Rollkörper 2 erkennbar. Die Halbringe und/oder die Haltemittel 3-4 können durch irgendwelche Verbindungsmittel zusammengefügt werden, wie beispielsweise durch eine Manschette, durch einen bajonettartigen Verschluss, mit Klebemittel, etc.

Figur 11 e) zeigt in einem Querschnitt eine Transporthalterung 1 die einen pneuförmigen Rollkörper 2 aufweist. Wie in der Bezeichnung von Pneus üblich, weist der pneuförmige Rollkörper 2 eine Lauffläche 2e und Schultern 2s auf. Die Lauffläche 2e bildet die ringförmige Rollfläche. An den Schultern 2s sind Haltemittel 3-4 anbringbar, die zum Halten des Transportobjekts 7 ausgebildet sind. Die Schultern 2s sind insbesondere ausgebildet, die Haltemittel 3-4 zu schützen. In einer Variante sind die Schultern 2s derart ausgebildet, dass bei einer ersten relativen Verdrehung des Rollkörpers 2 gegenüber dem Transportobjekt 7 dieses in den Rollkörper einbringbar und ausbringbar ist, wobei bei einer zweiten relativen Verdrehung des Rollkörpers 2 gegenüber dem Transportobjekt 7 das in den Rollkörper 2 eingebrachte Transportobjekt 7 von den Haltemittel 3-4 im Rollkörper 2 gehalten ist. Dadurch lässt sich das Transportobjekt 7 leicht in der Transporthalterung 1 anordnen und wieder daraus entfernen, wobei die Haltemittel 3-4 durch die Schultern 2s geschützt sind.

Bei den hier dargestellten Transporthalterungen 1 ist die Form einer Scheibe erkennbar, welche beispielsweise durch den Rollkörper 2 definiert ist oder durch den Rollkörper 2 zusammen mit dem darin angeordneten Transportobjekt 7. Es ist dadurch ein Durchmesser und eine Breite der Scheibe, bzw. anders formuliert eine Dicke der Scheibe definiert, wobei das Verhältnis zwischen dem Durchmesser und der Breite insbesondere mindestens drei beträgt.

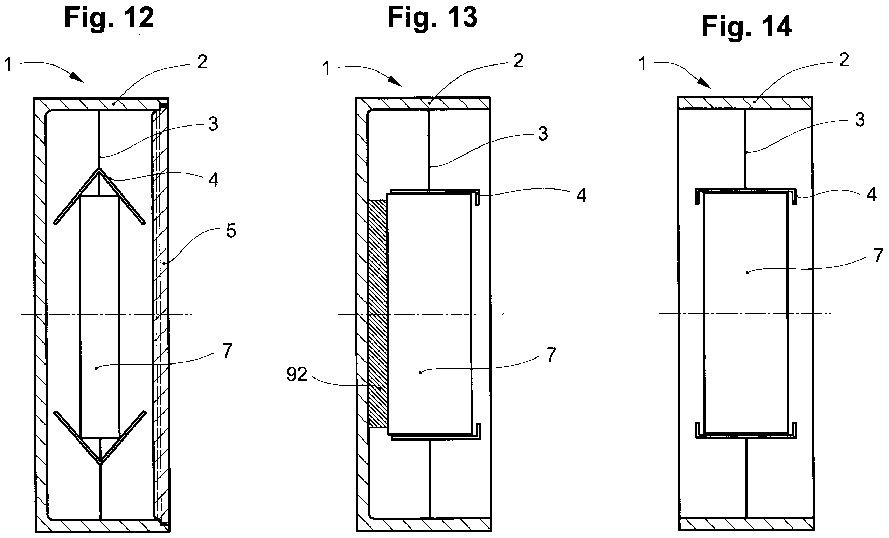

Figur 12 zeigt in einem Querschnitt eine schalenförmige Transporthalterung 1, welche mit einem Deckel 5 verschliessbar ist. Zum Verschliessen ist ein Schliessmittel 51 beispielsweise in der Form eines Gewindes, eines Presssitzes, etc. vorgesehen.

In der Transporthalterung 1 ist ein Transportobjekt 7 angeordnet, welches von den Haltemittel 3, 4 gehalten ist. Die Haltemittel 3, 4 weisen V-förmig ausgestaltete Fixiermittel 4 auf. Die V-förmigen Fixiermittel 4 ermöglichen es, Transportobjekte 7 unterschiedlicher Dicke in der Transporthalterung 7 zu fixieren. Das Transportobjekt 7 ist insbesondere in axialer Richtung immer zentriert fixiert.

Figur 13 zeigt in einem Querschnitt eine schalenförmige Transporthalterung 1. In der Transporthalterung 1 ist ein Transportobjekt 7 angeordnet, welches von den Haltemittel 3, 4 gehalten ist. Um das Transportobjekt 7 gegenüber der schalenförmigen Transporthalterung 1 abzustützen, ist eine Einlage 92 angeordnet. Die Haltemittel 3, 4 weisen ein L-förmig ausgestaltetes Fixiermittel 4 auf. Das L-förmige Fixiermittel 4 ermöglicht es, insbesondere im Zusammenwirken mit der Einlage 92 und/oder mit der schalenförmigen Transporthalterung 1 das Transportobjekt 7 in axialer Richtung zu fixieren. Die axiale Ausrichtung des Transportobjekts ergibt sich aus den Dimensionen wie z.B. der Dicke der Einlage 92 und den Dimensionen der L-förmigen Fixiermittel.

Figur 14 zeigt in einem Querschnitt eine reifenförmige Transporthalterung 1, mit Haltemittel 3, 4, welche U-förmige Fixiermittel 4 aufweisen zum Halten des Transportobjekts.

Bei einer Transporteinrichtung 1 mit einem reifenförmigen Rollkörper 2 lassen sich zwei Seiten des Transportobjekts 7 von aussen einsehen, also z.B. bei einem Buch als Transportobjekt 7 der vordere und der hintere Buchdeckel. Bei einer Transporteinrichtung 1 mit einem schalenförmigen Rollkörper 2 lässt sich eine Seite des Transportobjekts 7 von aussen einsehen, also z.B. bei einem Buch der vordere oder der hintere Buchdeckel. Bei einer Transporteinrichtung mit einem schalenförmigen Rollkörper 2 der mit einem Deckel 5 verschlossen ist, lässt sich das Transportobjekt nicht einsehen, welches dann allerdings gut geschützt ist. Bei einem schalenförmigen Rollkörper 2 und/oder einem Deckel 5 der transparent ausgestaltet ist oder mit einem Fenster versehen ist, lässt sich das Transportobjekt 7 auch durch den schalenförmigen Rollkörper 2 und/oder durch den Deckel 5 einsehen. Falls das Transportobjekt 7 in der Transporthalterung 1 einsehbar ist, kann ggf. auf das Anbringen eines von aussen auslesbaren Informationsträgers wie eines RFID-Tags oder eines Barcodes verzichtet werden.

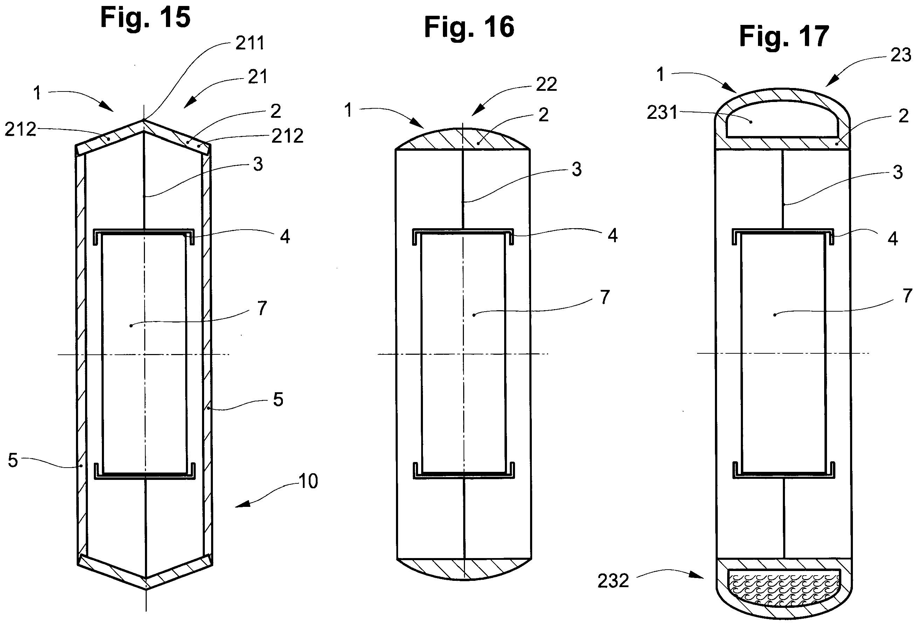

Figur 15 zeigt in einem Querschnitt eine Transporthalterung 1 mit einem reifenförmigen Rollkörper 2, welcher beidseitig mit einem Deckel 5 verschliessbar ist. Die Haltemittel 3, 4 sind eingerichtet, das Transportobjekt 7 zu halten, insbesondere relativ zum Rollkörper 2 zu fixieren.

Figuren 16 und 17 zeigen in einem Querschnitt eine Transporthalterung 1 mit einem reifenförmigen Rollkörper 2, welcher beidseitig offen ist. Die Haltemittel 3, 4 sind eingerichtet, das Transportobjekt 7 zu halten, insbesondere relativ zum Rollkörper 2 zu fixieren. Die Haltemittel 3, 4 umfassen ein U-förmiges Fixiermittel 4.

Die Laufkörper 21, 22, 23 der Rollkörper 2 gemäss Figuren 15, 16 und 17 sind unterschiedlich ausgebildet, wie nachfolgend beschrieben wird.

Der Querschnitt des Laufkörpers 21 des Rollkörpers 2 gemäss Figur 15 ist stumpfwinklig mit einer Winkelspitze 211 und Schenkeln 212 ausgebildet, wobei der an der Innenseite des Rollkörpers 2 gemessene Winkel beispielsweise mehr als ungefähr 45° beträgt. Dementsprechend weist der Rollkörper 2 eine stumpfwinklige, ringförmige Rollfläche auf. Je nach Unterlage kann der Rollkörper auf der Winkelspitze 211 und/oder einem oder beiden Schenkeln 212 abgerollt werden. Der Laufkörper 21 kann bei Bedarf auch spitzwinklig ausgebildet sein, wobei der an der Innenseite des Rollkörpers gemessene Winkel zwischen den Schenkeln weniger als beispielsweise ungefähr 45° beträgt. Bei einer stumpfwinkligen Ausführung ergibt sich eine eher breite Transporthalterung 1, während sich bei einer spitzwinkligen Ausführung eine eher schmaler Transporthalterung 1 ergibt.

Der Querschnitt des Laufkörpers 22 des Rollkörpers 2 gemäss Figur 16 weist eine gebogene Form auf. Beispielsweise ist die gebogene Form von der Art eines Kreissegments, Parabelsegments, etc. ausgeführt. Die gebogene Form des Laufkörpers 22 kann so ausgeführt sein, dass sich unabhängig von einer Neigung des Rollkörpers 2 gegenüber einer Unterlage immer ungefähr dieselbe Kontaktfläche mit einer Unterlage und damit ungefähr derselbe Rollwiderstand ergibt. Dementsprechend weist der Rollkörper 2 eine gebogene, ringförmige Rollfläche auf. In einer Variante ist die gebogene Form des Rollkörpers 22 derart ausgeführt, dass sich die Kontaktfläche mit einer Unterlage mit zunehmender Neigung vergrössert. Dies kann vorteilhaft sein, falls der Rollkörper 2 in der Form einer Kurve abrollt, um durch die vergrösserten Kontaktfläche zwischen dem Rollkörper sowie der Unterlage und der dadurch erhöhten Reibung seitliche Fliehkräfte aufzunehmen.

Der Querschnitt des Laufkörpers 23 des Rollkörpers 2 gemäss Figur 17 weist einen geschlossenen Hohlraum 231 auf. Der Laufkörper weist eine gebogene Form auf, an welche der Hohlraum 231 angepasst ist, so dass vom Hohlraum 231 gegen aussen der Laufkörper 23 eine im Wesentlichen konstante Wandstärke aufweist. Der Rollkörper 2 weist eine gebogene, ringförmige Rollfläche auf. Wie in Figur 17 schematisch dargestellt ist der Hohlraum231 vorgesehen, um eine gegenüber dem Rollkörper 2 mehr oder weniger frei bewegliche Masse 232 aufzunehmen, beispielsweise in der Form einer Flüssigkeit, von Kugeln hoher Masse, etc. Durch die frei bewegliche Masse 232 weist die Transporthalterung 1 einen gegenüber der Unterlage tiefen Schwerpunkt auf und hat deshalb eine geringere Neigung, beim Rollen zu kippen.

Durch die beidseitig angeordnete Deckel 5 ist der Rollkörper 2 der in Figur 15 dargestellten Transporthalterung 1 ebenfalls in der Lage, eine frei bewegliche Masse in der Form einer Flüssigkeit, von Kugeln hoher Masse, etc. aufzunehmen, wodurch sich die Stabilität bei Rollen ebenfalls verbessert.

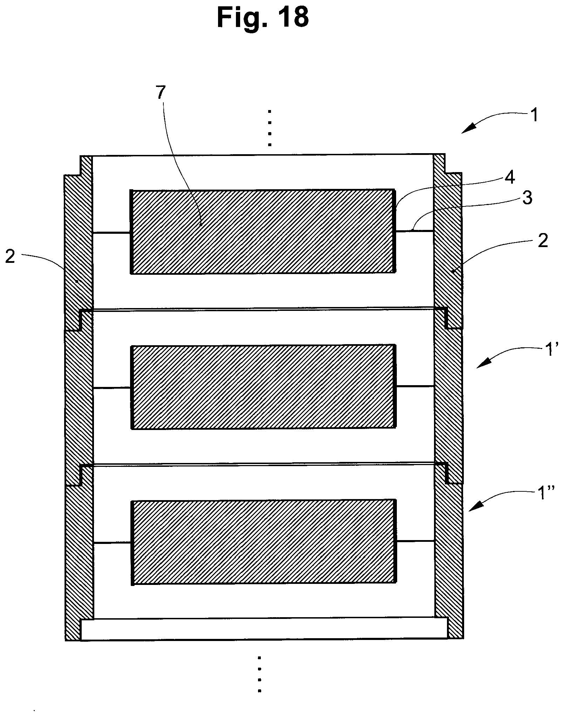

Figur 18 zeigt in einem Querschnitt drei Transporthalterungen 1, 1', 1 ", welche aufeinander gestapelt sind. Wie in Figur 18 mit Punkten angedeutet, kann eine beliebige Anzahl Transporthalterungen 1, 1', 1" aufeinander gestapelt werden.

Um eine stabile Stapelung zu ermöglichen, weisen die Rollkörper 2 der Transporthalterungen einander ergänzende Nuten und Vorsprünge auf. Die Transporthalterungen 1, 1', 1" sind in einer Variante ausgebildet, dass diese mit oder ohne angebrachte Transportobjekte 7 gestapelt werden können, beispielsweise in einer Lagervorrichtung. In einer Variante sind die Transporthalterungen 1, 1', 1" ausgebildet, dass diese ohne angebrachte Transportobjekte 7 möglichst kompakt stapelbar sind, beispielsweise durch sich ergänzende konische Innen- und Aussenformen der Rollkörper 2. Dadurch lassen sich leere Transporthalterungen 1, 1', 1" kompakt lagern und transportieren.

In einer Variante sind die Transporthalterungen 1, 1', 1" mit einem Verbindungsmittel miteinander derart verbunden, dass diese gemeinsam als Paket auf einer Unterlage gerollt werden können. Das Verbindungsmittel kann beispielsweise einen mechanischen Verschluss, eine Schraubverbindung, eine Klebeverbindung, einen Klettverschluss, etc. umfassen.

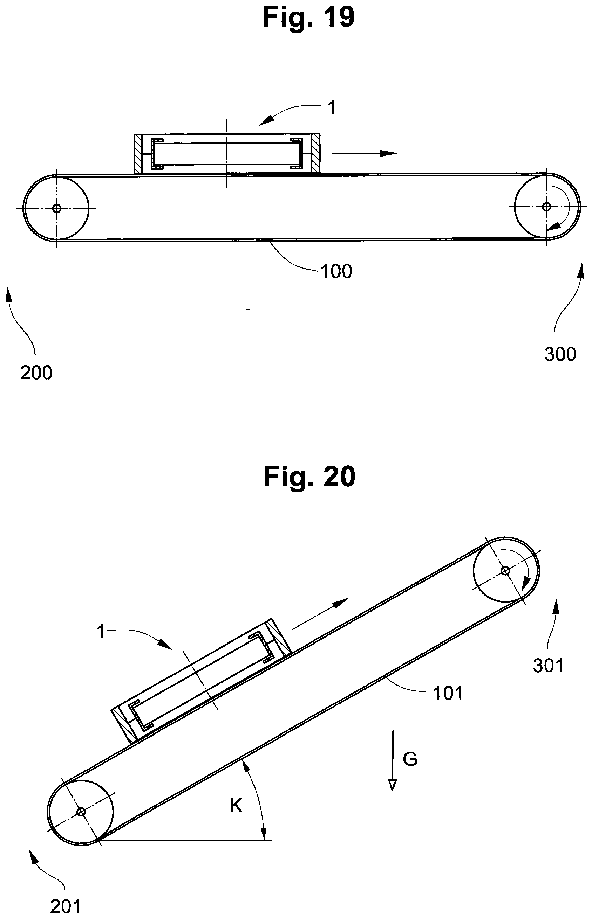

Figur 19 zeigt in einem Querschnitt eine Transporteinrichtung 100, auf welcher eine Transporthalterung 1 abgelegt ist. Die Transporteinrichtung 100 weist beispielsweise ein Förderband auf, welches an einer oder beiden Umlenkrollen von einem Motor angetrieben wird. Die Transporthalterung 1 kann durch die Transporteinrichtung 100 von einem Ausgangsort 200 zu einem Zielort 300 transportiert werden. Es können hintereinander mehrere Transporteinrichtungen 100 vorgesehen sein, um die Transporthalterung 1 über grössere Distanzen zu transportieren. Die in Figur 19 gezeigte Transporteinrichtung 100 ist horizontal angeordnet.

Figur 20 zeigt in einem Querschnitt eine geneigte bzw. schräg angeordnete Transporteinrichtung 101, auf welcher eine Transporthalterung 1 abgelegt ist. Die Neigung ist in Figur 20 mit dem Winkel K bezeichnet. Die Transporthalterung 1 wird von der geneigten Transporteinrichtung 101 von einem Ausgangsort 201 zu einem Zielort 301 transportiert, wobei das Niveau des Zielorts 301 gegenüber dem Ausgangsort 201 höher oder tiefer gelegen ist. In Figur 20 bezeichnet der Pfeil G die Richtung der Erdbeschleunigung. Beim Transport wird der Transporthalterung 1 somit potentielle Energie zugeführt oder entzogen. Die zugeführte potentielle Energie kann genutzt werden, um danach die Transporthalterung durch Abrollen auf der Rollfläche des Rollkörpers 2 auf einer geeigneten Unterlage ohne Zuführung von Energie von einem höher gelegenen Niveau auf ein tiefer gelegenes Niveau zu rollen. Da die Transporthalterung 1 in einer bevorzugten Ausführungsform nur durch Kippen um 90° von einer abgelegten Position in eine rollende Position (und umgekehrt) gebracht werden kann, ist eine einfache Handhabung gewährleistet. Es können mehrere geneigte Transporteinrichtungen 101 vorgesehen sein, um die Transporthalterung 101 über grössere Distanzen und/oder grössere Niveauunterschiede zu transportieren. Um ein Rutschen der auf der geneigten Transporteinrichtung 101 abgestellten Transporthalterung 1 zu verhindern, weist die Transporteinrichtung 101 optional geeignete Mittel wie eine raue Oberfläche mit einem hohen Reibungskoeffizient, Anschlagelemente, etc. auf.

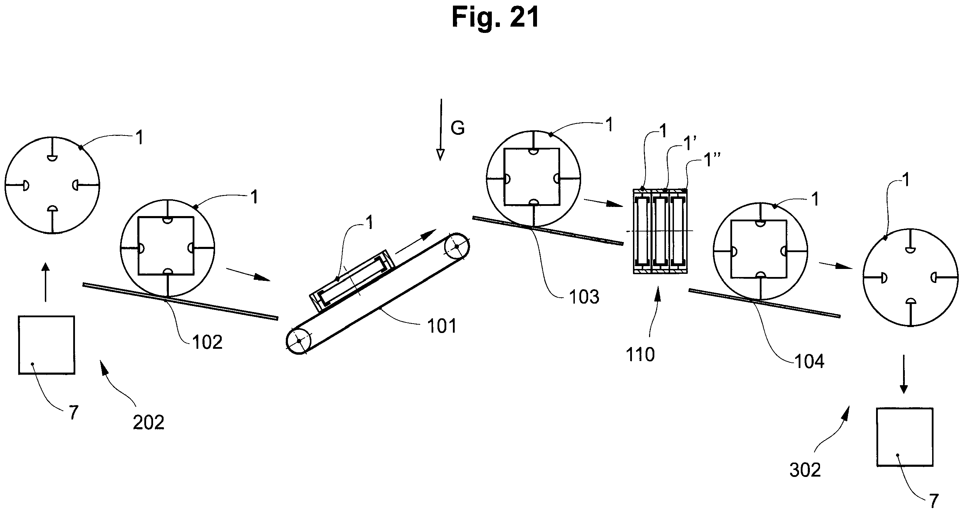

Figur 21 zeigt in einem Querschnitt mehrere geneigte Unterlagen 102, 103, 104, eine geneigte Transporteinrichtung 101 und eine Lagervorrichtung 110. In Figur 21 bezeichnet der Pfeil G die Richtung der Erdbeschleunigung. An einem Ausgangsort 202 wird ein Transportobjekt 7 in einer Transporthalterung 1 angeordnet. Die Transporthalterung 1 rollt aufgrund der Erdbeschleunigung zusammen mit dem Transportobjekt 7 auf einer Rollfläche auf der geneigten Unterlage mit dem Bezugszeichen 102 zur geneigten Transporteinrichtung 101. Die Transporthalterung 1 wird auf einer Stellfläche auf der Transporteinrichtung 101 auf einer Stellfläche abgestellt und von der Transporteinrichtung 101 von einem tiefen Niveau auf ein hohes Niveau transportiert. Die Transporthalterung 1 rollt auf der geneigten Unterlage 103 zur Lagervorrichtung 110 und wird dort eingelagert. Bei Bedarf wird eine Transporthalterung 1, 1', 1" aus der Lagervorrichtung 110 zur geneigten Unterlage mit dem Bezugszeichen 104 geführt und darauf in Richtung Zielort 302 gerollt. Beim Zielort 302 wird das Transportobjekt 7 aus der Transporthalterung 1 entnommen. Falls erwünscht, wird die Transporthalterung 1 vom Zielort 302 zum Ausgangsort 202 zurückgeführt.

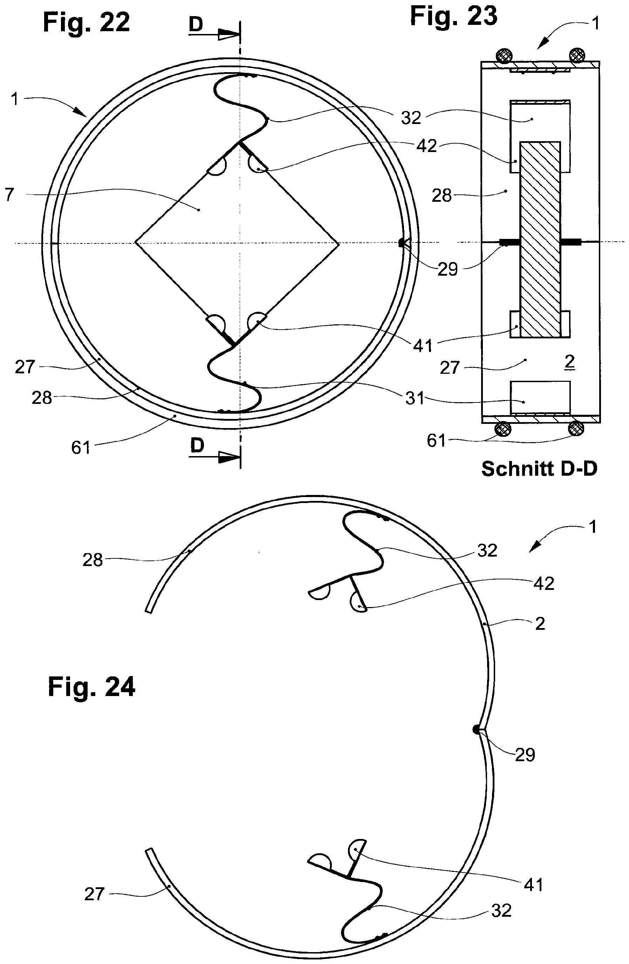

Figur 22 zeigt in einer Aufsicht eine Transporthalterung 1 mit darin angeordnetem Transportobjekt 7. Die Transporthalterung 7 umfasst einen reifenförmigen Rollkörper 2, der in Umlaufrichtung in zwei Teile 27, 28 unterteilt ist. Die beiden Teile 27, 38 sind mit einem Scharnier 29 verbunden und können geöffnet werden, um darin ein Transportobjekt 7 anzuordnen, und dann geschlossen werden, um das Transportobjekt 7 in der Transporthalterung 1 zu halten.

Zum Halten des Transportobjekts 7 in der Transporthalterung 1 sind zwei elastische Arme 31, 32 vorgesehen, welche S-förmig ausgebildet sind. Die elastischen Arme 31, 32 sind am einen Ende je an einem Teil 27, 28 des reifenförmigen Rollkörpers 2 angebracht. Am anderen Ende weisen die elastischen Arme 31, 32 U-förmige Fixiermittel auf, um das Transportobjekt 7 in der Transporthalterung in axialer Richtung zu fixieren. Durch die elastischen Arme wird das Transportobjekt 7 in radialer Richtung gehalten. Dies ergibt sich insbesondere durch die S-förmige Ausbildung, welche bewirkt, dass das Transportobjekt 7 mit einer Federkraft in radialer Richtung gehalten ist.

Nach dem Schliessen der beiden Teile 27, 28 können Schliessmittel 61 dafür sorgen, dass sich der Rollkörper insbesondere beim Rollen nicht versehentlich öffnet. In einer Ausführungsform umfassen die Schliessmittel 61 am Aussenumfang angebrachte elastische Ringe, die bevorzugt als ein zusätzliches Rollmittels wirken, um die Rolleigenschaften der Transporthalterung 1 zu verbessern. Zum Schliessen der beiden Teile 27, 28 können irgendwelche andere Schliessmittel 61 vorgesehen sein, beispielsweise ein Schnappverschluss, ein Schraubverschluss, etc.

Figur 23 zeigt in einem Querschnitt die Transporthalterung 1 aus Figur 22 gemäss dem Schnitt D-D. Die Transporthalterung 1 weist einen Rollkörper 2 mit den beiden Teilen 27, 28 auf, die mit dem Scharnier 29 miteinander verbunden sind. Die beiden Teile 27, 28 sind somit gegeneinander beweglich und der Rollkörper 2 ist damit zum Öffnen und Schliessen eingerichtet. Am Aussenumfang sind zwei elastische Ringe ersichtlich, die nach dem Schliessen des Rollkörpers 2 die beiden Teile 27, 28 zusammenhalten.

Figur 24 zeigt in einer Aufsicht die Transporthalterung 1 aus Figur 22 und Figur 23, wobei die elastischen Ringe entfernt sind und die beiden Teile 27, 28 des Rollkörpers 2 geöffnet sind. Das Transportobjekt wurde aus der Transporthalterung 1 entnommen resp. die Transporthalterung 1 ist zum Anordnen eines Transportobjekts vorbereitet.

Statt aus zwei Teilen 27, 28 mit einem Scharnier 29, kann der Rollkörper 2 der Transporthalterung 1 in irgendeiner anderen Weise aus mehreren Teilen aufgebaut sein, wobei Mittel vorgesehen sein können, um den Rollkörper 2 einfach und zuverlässig zu öffnen und zu schliessen. Ein aus mehreren Teilen aufgebauter Rollkörper 2 kann die Handhabung der Transporthalterung 1 zusätzlich vereinfachen, insbesondere kann infolge weiterer Freiheitsgrade beim geöffneten Rollkörper 2 das Anordnen und/oder das Entfernen des Transportobjekts 7 vereinfacht sein.

## Patentansprüche

1. Transporthalterung (1) für ein Transportobjekt (7), umfassend einen Rollkörper (2) mit einer ringförmigen Rollfläche zum Abrollen des Rollkörpers (2) auf einer Unterlage, **gekennzeichnet durch** an die Form des Transportobjekts (7) anpassbare Haltemittel (31...36, 41...46) zum Halten des Transportobjekts (7) im Rollkörper (2) derart, dass der Rollkörper (2) das Transportobjekt (7) umschliesst.

2. Transporthalterung (1) nach Anspruch 1, **dadurch gekennzeichnet, dass** die Transporthalterung (1) zum stabilen Ablegen auf einer Unterlage ausgebildet ist.

3. Transporthalterung (1) nach Anspruch 2, **dadurch gekennzeichnet, dass** die Transporthalterung (1) ausgebildet ist, dass durch ein Kippen der Transporthalterung (1) um ungefähr 90° zwischen dem stabilen Ablegen und dem Abrollen auf einer Unterlage gewählt werden kann.

4. Transporthalterung (1) nach Anspruch einem der Ansprüche 1 bis 3, **dadurch gekennzeichnet, dass** der Rollkörper (2) die Form eines Rollrahmens aufweist und/oder scheibenförmig ausgebildet ist, wobei vorzugsweise ein Durchmesser des Rollkörpers (2) verstellbar ist.

5. Transporthalterung (1) nach einem der Ansprüche 1 bis 4, **dadurch gekennzeichnet, dass** die Transporthalterung (1) aus einem einzigen Teil besteht oder aus mehreren Teilen zusammengesetzt ist.

6. Transporthalterung (1) nach einem der Ansprüche 1 bis 5, **dadurch gekennzeichnet, dass** der Rollkörper (2) zwei oder mehr Teile (27, 28) umfasst und der Rollkörper (2) zum Öffnen und Schliessen ausgebildet ist, wobei vorzugsweise Schliessmittel (61) zum Schliessen des Rollkörpers (2) vorgesehen sind.

7. Transporthalterung (1) nach Anspruch einem der Ansprüche 1 bis 6, **dadurch gekennzeichnet, dass** die Haltemittel (31...36, 41...46) das Transportobjekt (7) bezüglich des Rollkörpers (2) in einer radialen und/oder in einer axialen Richtung fixieren.

8. Transporthalterung (1) nach einem der Ansprüche 1 bis 7, **dadurch gekennzeichnet, dass** die Haltemittel (31...36, 41...46) elastisch oder starr ausgebildet sind.

9. Transporthalterung (1) nach einem der Ansprüche 1 bis 8, **dadurch gekennzeichnet, dass** der Rollkörper (2) auf mindestens einer Seite mit mindestens einem Deckel (5) verschlossen ist oder verschliessbar ist,.

10. Transporthalterung (1) nach einem der Ansprüche 1 bis 9, **dadurch gekennzeichnet, dass** am Rollkörper (2) ein zusätzliches Rollmittel (6) angeordnet ist.

11. Transporthalterung (1) nach einem der Ansprüche 1 bis 10, **dadurch gekennzeichnet, dass** die Transporthalterung (1) derart ausgebildet ist, dass das Transportobjekt (7) von aussen einsehbar ist.

12. Transporthalterung (1) nach einem der Ansprüche 1 bis 11, **dadurch gekennzeichnet, dass** ein von aussen abfragbarer Informationsträger angeordnet ist, welcher vorzugsweise ein optisch ablesbarer Barcode (81) und/oder ein funkbasiert auslesbarer RFID-Tag (82) ist.

13. Verfahren zum Transportieren eines Transportobjekts (7), wobei bei einem Ausgangsort (202) das Transportobjekt (7) in einer Transporthalterung (1) gemäss einem der Ansprüche 1 bis 12 angeordnet wird, wobei die Transporthalterung (1) vom Ausgangsort (202) zu einem Zielort (302) transportiert wird und wobei beim Zielort (302) das Transportobjekt (7) aus der Transporthalterung (1) entnommen wird.

14. Verfahren nach Anspruch 13, **dadurch gekennzeichnet, dass** die Transporthalterung (1) für den Transport zumindest auf einer Teilstrecke zwischen dem Ausgangsort (202) und dem Zielort (302) auf einer oder mehreren Unterlagen (102, 103, 104) abgerollt wird, und/oder dass die Transporthalterung (1) zumindest auf einer Teilstrecke zwischen dem Ausgangsort (202) und dem Zielort (302) auf einer oder mehreren Transporteinrichtungen (101) abgelegt transportiert wird.

15. Verfahren nach Anspruch 13 oder 14, **dadurch gekennzeichnet, dass** die Transporthalterung (1) zwischen dem Ausgangsort (202) und dem Zielort (302) in einer Lagervorrichtung (110) zwischengelagert wird.

## Claims

1. A transport holder (1) for an object (7) to be transported, comprising a roller body (2) having a ring-shaped roller surface for rolling the roller body (2) on a base, **characterized by** retaining means (31...36, 41...46), adaptable to the shape of the object (7) to be transported, for holding the object (7) to be transported in the roller body (2) in such a way that the roller body (2) encloses the object (7) to be transported.

2. The transport holder (1) according to Claim 1, **characterized in that** the transport holder (1) is designed to be stably deposited on a base.

3. The transport holder (1) according to Claim 2, **characterized in that** the transport holder (1) is designed for allowing a selection to be made between the stable deposition and the rolling on a base by tilting the transport holder (1) by approximately 90°.

4. The transport holder (1) according to one of Claims 1 to 3, **characterized in that** the roller body (2) has the shape of a roller frame and/or has a disk-shaped design, wherein a diameter of the roller body (2) is preferably adjustable.

5. The transport holder (1) according to one of Claims 1 to 4, **characterized in that** the transport holder (1) consists of one single part or is made up of multiple parts.

6. The transport holder (1) according to one of Claims 1 to 5, **characterized in that** the roller body (2) comprises two or more parts (27, 28), and the roller body (2) is designed for opening and closing, whereby preferably closing means (61) for closing the roller body (2) are provided.

7. The transport holder (1) according to one of Claims 1 to 6, **characterized in that** the retaining means (31...36, 41...46) fix the object (7) to be transported with respect to the roller body (2) in a radial direction and/or in an axial direction.

8. The transport holder (1) according to one of Claims 1 to 7, **characterized in that** the retaining means (31...36, 41...46) have an elastic or rigid design.

9. The transport holder (1) according to one of Claims 1 to 8, **characterized in that** the roller body (2) is closed or can be closed on at least one side via at least one cover (5).

10. The transport holder (1) according to one of Claims 1 to 9, **characterized in that** an additional roller means (6) is arranged on the roller body (2).

11. The transport holder (1) according to one of Claims 1 to 10, **characterized in that** the transport holder (1) is designed in such a way that the object (7) to be transported is visible from the outside.

12. The transport holder (1) according to one of Claims 1 to 11, **characterized in that** an information carrier is arranged that can be queried from the outside, and which is preferably an optically readable barcode (81) and/or a wirelessly readable RFID tag (82).

13. A method for transporting an object (7) to be transported, wherein at a point of origin (202) the object (7) to be transported is arranged in a transport holder (1) according to one of Claims 1 to 12, wherein transport holder (1) is transported from the point of origin (202) to a point of destination (302), and wherein at the point of destination (302) the object (7) to be transported is removed from the transport holder (1).

14. The method according to Claim 13, **characterized in that** for at least a part of the stretch between the point of origin (202) and the point of destination (302), for transport the transport holder (1) is rolled on one or more bases (102, 103, 104), and/or that for at least a part of the stretch between the point of origin (202) and the point of destination (302), the transport holder (1) is transported while deposited on one or more transport devices (101).

15. The method according to Claim 13 or 14, **characterized in that** between the point of origin (202) and the point of destination (302), the transport holder (1) is temporarily stored in a storage device (110).

## Revendications

1. Support de transport (1) pour un objet transporté (7), comprenant un corps roulant (2) avec une surface de roulement annulaire pour faire rouler le corps roulant (2) sur une base, **caractérisé par** des moyens de maintien (31 ... 36, 41 ... 46) adaptables à la forme de l'objet transporté (7) pour maintenir l'objet transporté (7) dans le corps roulant (2) de telle sorte que le corps roulant (2) entoure l'objet transporté (7).

2. Support de transport (1) selon la revendication 1, **caractérisé en ce que** ledit support de transport (1) est réalisé pour être déposé de manière stable sur une base.

3. Support de transport (1) selon la revendication 2, **caractérisé en ce que** ledit support de transport (1) est réalisé de telle sorte qu'un basculement du support de transport (1) d'environ 90° permet de choisir entre la dépose stable et le roulement sur une base.

4. Support de transport (1) selon l'une quelconque des revendications 1 à 3, **caractérisé en ce que** le corps roulant (2) présente la forme d'un cadre roulant et/ou est réalisé sous forme de disque, un diamètre du corps roulant (2) étant de préférence réglable.

5. Support de transport (1) selon l'une quelconque des revendications 1 à 4, **caractérisé en ce que** le support de transport (1) est composé d'une seule pièce ou est assemblé à partir de plusieurs pièces.

6. Support de transport (1) selon l'une quelconque des revendications 1 à 5, **caractérisé en ce que** le corps roulant (2) comprend deux pièces (27, 28) ou plus et le corps roulant (2) est réalisé pour s'ouvrir et se fermer, des moyens de fermeture (61) pour fermer le corps roulant (2) étant de préférence prévus.

7. Support de transport (1) selon l'une quelconque des revendications 1 à 6, **caractérisé en ce que** les moyens de maintien (31 ... 36, 41 ... 46) fixent l'objet transporté (7) par rapport au corps roulant (2) dans une direction radiale et/ou axiale.

8. Support de transport (1) selon l'une quelconque des revendications 1 à 7, **caractérisé en ce que** les moyens de maintien (31 ... 36, 41 ... 46) sont réalisés de manière élastique ou rigide.

9. Support de transport (1) selon l'une quelconque des revendications 1 à 8, **caractérisé en ce que** le corps roulant (2) est fermé ou peut être fermé sur au moins un côté par au moins un couvercle (5).

10. Support de transport (1) selon l'une quelconque des revendications 1 à 9, **caractérisé en ce qu'**un moyen roulant (6) supplémentaire est disposé sur le corps roulant (2).

11. Support de transport (1) selon l'une quelconque des revendications 1 à 10, **caractérisé en ce que** le support de transport (1) est réalisé de telle sorte que l'objet transporté (7) est visible de l'extérieur.

12. Support de transport (1) selon l'une quelconque des revendications 1 à 11, **caractérisé en ce qu'**un support d'informations consultable de l'extérieur est disposé, qui est de préférence un code à barres (81) à lecture optique et/ou une étiquette RFID (82) à lecture radioélectrique.

13. Procédé de transport d'un objet transporté (7), dans lequel, à un point de départ (202), l'objet transporté (7) est disposé dans un support de transport (1) selon l'une quelconque des revendications 1 à 12, le support de transport (1) est transporté du point de départ (202) jusqu'à un point d'arrivée (302), et l'objet transporté (7) est retiré du support de transport (1) au point d'arrivée (302).

14. Procédé selon la revendication 13, **caractérisé en ce que** pour le transport, le support de transport (1) est amené à rouler sur une ou plusieurs bases (102, 103, 104) au moins sur un tronçon entre le point de départ (202) et le point d'arrivée (302), et/ou **en ce que** le support de transport (1) est transporté au moins sur un tronçon entre le point de départ (202) et le point d'arrivée (302) en étant posé sur un ou plusieurs dispositifs de transport (101).

15. Procédé selon la revendication 13 ou 14, **caractérisé en ce que** le support de transport (1) est entreposé entre le point de départ (202) et le point d'arrivée (302) dans un dispositif de stockage (110).
